(19) **Europäisches Patentamt / European Patent Office / Office européen des brevets**

(11) **EP 4 535 689 A1**

(12) **EUROPEAN PATENT APPLICATION**
published in accordance with Art. 153(4) EPC

(43) Date of publication:
**09.04.2025 Bulletin 2025/15**

(21) Application number: **23815554.3**

(22) Date of filing: **31.03.2023**

(51) International Patent Classification (IPC):
**H04B 10/70** (2013.01)   **H04L 9/12** (2006.01)

(52) Cooperative Patent Classification (CPC):
**H04B 10/70; H04L 9/12**

(86) International application number:
**PCT/JP2023/013509**

(87) International publication number:
**WO 2023/233792 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2022   JP 2022088259**

(71) Applicant: **Sony Group Corporation**
**Tokyo 108-0075 (JP)**

(72) Inventors:
• **IDA, Takahiro**
**Tokyo 108-0075 (JP)**
• **TEZUKA, Hiroyuki**
**Tokyo 108-0075 (JP)**

(74) Representative: **D Young & Co LLP**
**3 Noble Street**
**London EC2V 7BQ (GB)**

(54) **MEASUREMENT DEVICE**

(57)    A measurement device that receives quantum entangled light from one or more paths includes one or more beam splitters that cause interference of the quantum entangled light, a plurality of light receiving elements provided corresponding to respective paths branched by a plurality of splitters including at least the beam splitter, a branching unit that stochastically disperses photons in the plurality of light receiving elements, and a measurement instrument that detects respective detection timings of photons in the plurality of light receiving elements.

## FIG.1

**Description**

Field

The present disclosure relates to a measurement device.

Background

In recent years, research and technical development using a correlation generated between a plurality of quantum states called quantum entanglement have been actively conducted. The fields in which use of quantum entanglement plays an important role include quantum communication and quantum sensing. By using quantum entanglement, it is expected to achieve quantum communication for connecting quantum computers and quantum sensing with higher sensitivity than existing technologies. Examples of devices relating to quantum entanglement include light detection systems for bell measurements intended for application to quantum communication (for example, Patent Literature 1). In order to utilize quantum entanglement as an asset, it is necessary to detect by measurement that a plurality of quantum states is in an entangled state (bell state). In quantum communication, a light detection system for performing this measurement (bell measurement) is an essential component.

Citation List

Patent Literature

Patent Literature 1: JP 2012-004956 A

Summary

Technical Problem

When using quantum entanglement, it is required to efficiently generate a quantum entanglement state. However, current devices cannot efficiently generate quantum entanglement. Quantum entanglement needs to be continuously supplied for computing and sensing using it. In the supply of the quantum entanglement, the number of generations of entanglement per unit time is important. However, in existing devices, emphasis is placed on the success probability of bell measurement for detecting quantum entanglement, and there is a problem in the number of generations of entanglement per unit time, for example.

Therefore, the present disclosure proposes a measurement device capable of efficiently generating quantum entanglement.

Note that the above problem or object is merely one of a plurality of problems or objects that can be solved or achieved by the plurality of embodiments disclosed in the present description.

Solution to Problem

In order to solve the above problem, a measurement device according to one aspect of the present disclosure that receives quantum entangled light from one or more paths, the measurement device comprising: one or more beam splitters that cause interference of the quantum entangled light; a plurality of light receiving elements provided corresponding to respective paths branched by a plurality of splitters including at least the beam splitter; a branching unit that stochastically disperses photons in the plurality of light receiving elements; and a measurement instrument that detects respective detection timings of photons in the plurality of light receiving elements.

Brief Description of Drawings

FIG. 1 is a diagram illustrating an example of a quantum entangled light detection system of the present embodiment.
FIG. 2 is a flowchart illustrating a method of quantum entangled light detection of the present embodiment.
FIG. 3 is a diagram illustrating an application example of the present embodiment to quantum communication.
FIG. 4 is a diagram illustrating an application example of the present embodiment to quantum sensing.
FIG. 5 is a diagram illustrating an example of a method for implementing the present embodiment in a case of polarization encoding.

FIG. 6 is a diagram illustrating an example of a method for implementing the present embodiment in a case of path encoding.

FIG. 7 is a flowchart illustrating a method of photon introduction in the polarization encoding.

FIG. 8 is a flowchart illustrating a method of photon introduction in the path encoding.

FIG. 9 is a flowchart illustrating a method of light detection.

FIG. 10 is a diagram illustrating a specific example of isolation.

FIG. 11 is a diagram illustrating an example of a device that issues a timing clock to an outside of a detector.

FIG. 12 is a diagram illustrating an example of the device that issues a timing clock to the outside of the detector.

FIG. 13 is a flowchart illustrating a method of post-selection.

FIG. 14 is a diagram illustrating a modification example of a photon detector (group) and a post-selection functional unit.

FIG. 15 is a diagram illustrating a modification example of a photon detector (group) and the post-selection functional unit.

FIG. 16 is a diagram illustrating an example of a configuration of the present embodiment in a case of the polarization encoding.

FIG. 17 is a flowchart illustrating a method of photon introduction in the polarization encoding.

FIG. 18 is a diagram illustrating an example of a configuration of the present embodiment in a case of the path encoding.

FIG. 19 is a flowchart illustrating a method of photon introduction in the path encoding.

FIG. 20 is a flowchart illustrating a method of post-selection in a case of quantum communication.

FIG. 21 is a diagram illustrating an example of a configuration of the present embodiment in a case of photon presence/absence encoding.

FIG. 22 is a flowchart illustrating a method of photon introduction in the photon presence/absence encoding.

FIG. 23 is a diagram illustrating an example of a configuration of the present embodiment in a case of time encoding.

FIG. 24 is a flowchart illustrating a method of photon introduction in the time encoding.

FIG. 25 is a diagram illustrating an example of a configuration of the present embodiment of the quantum sensing.

FIG. 26 is a flowchart illustrating a method of the post-selection in a case of the quantum sensing.

FIG. 27 is a diagram illustrating a first application example of the quantum sensing.

FIG. 28 is a diagram illustrating a second application example of the quantum sensing.

FIG. 29 is a diagram illustrating a third application example of the quantum sensing.

FIG. 30 is a diagram illustrating a fourth application example of the quantum sensing.

FIG. 31 is a diagram illustrating a first configuration example of a light branching unit and a photodetector.

FIG. 32 is a diagram illustrating a second configuration example of the light branching unit and the photodetector.

FIG. 33 is a diagram illustrating another configuration example of the photodetector.

FIG. 34 is a diagram illustrating an example of photodetector performance in a single element.

FIG. 35 is a diagram illustrating an example of behavior of light detection.

FIG. 36 is a diagram illustrating an example of a case where light can be detected.

FIG. 37 is a diagram illustrating an example of a case where light cannot be detected.

FIG. 38 is a diagram illustrating an example of a model of light detection.

FIG. 39 is a diagram illustrating an example of deriving a light detection rate.

FIG. 40 is a diagram illustrating an example of a model of light detection in a case where the photodetector includes multiple elements.

FIG. 41 is a diagram illustrating an example of a model of light detection in a case where the photodetector includes multiple elements.

FIG. 42 is a diagram illustrating an example of dispersed light and detection by multiple elements.

FIG. 43 is a diagram illustrating an example of calculation of a maximum light detection rate with respect to the number of elements.

FIG. 44 is a diagram illustrating an example of calculation of a maximum light detection rate with respect to the number of elements.

FIG. 45 is a hardware configuration diagram illustrating an example of a computer that implements functions of the information processing device.

Description of Embodiments

Hereinafter, an embodiment of the present disclosure will be described in detail with reference to the drawings.

One or more embodiments (examples and modifications) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

Furthermore, the present disclosure will be described according to the following order of items.

1. Embodiment
1-1. Outline of Present Embodiment
1-2. Method for Implementing Quantum Entangled Light Detection
1-3. Application Example of Present Embodiment
1-4. Example of Method for Implementing Present Embodiment Due to Difference in Quantum Bit Encoding
1-5. Method for Implementing Photon Introduction in Polarization Encoding
1-6. Method for Implementing Photon Introduction in Path Encoding
1-7. Method for Implementing Photon Detection
1-8. Method for Implementing Isolation
1-9. Example of Method for Implementing Photodetector
1-10. Method for Implementing Post-Selection
1-11. Configuration that Can Be Taken by Respective Functional Units of Light Detection and Post-Selection
1-12. Configuration and Processing Example in Polarization Encoding
1-13. Configuration and Processing Example in Path Encoding
1-14. Post-Selection Example in Quantum Communication
1-15. Configuration and Processing Example in Photon Presence/Absence Encoding
1-16. Configuration and Processing Example in Time Encoding
1-17. Configuration Example in Quantum Sensing
1-18. Post-Selection Example in Quantum Sensing
1-19. Application Example of Quantum Sensing
1-19-1. First Application Example (Two-Photon Excitation/Second Harmonic Microscope)
1-19-2. Second Application Example (Near Infrared Fluorescence Imaging)
1-19-3. Third Application Example (Near-Infrared Light Brain Measurement Device)
1-19-4. Fourth Application Example (Flow Cytometer)
1-20. Configuration Example of Light Branching Unit and Photodetector
1-20-1. First Configuration Example (Plurality of Elements)
1-20-2. Second Configuration Example (Array Element)
1-20-3. Another Configuration Example (Single Array Type Detector)
1-21-4. Photodetector Performance
2. Modification Example
3. Conclusion
4. Effects According to Present Disclosure
5. Hardware Configuration

<1. Embodiment>

<1-1. Outline of Present Embodiment>

In recent years, research and technical development using a correlation generated between a plurality of quantum states called quantum entanglement have been actively conducted. As fields in which use of quantum entanglement plays an important role, there are quantum communication and quantum sensing, and both are required to efficiently generate a quantum entanglement state.

One of the problems of quantum entanglement formation is bell measurement using light. This is a measurement for determining the correlation between quantum states of quantum systems that are desired to form a quantum entanglement. Thus, efficiently obtaining a successful event of the bell measurement is a necessary condition for efficiently forming the quantum entanglement. How to encode the quantum state using light affects |0> or |1> of the quantum bit in determining a bell measurement success. There are the following features and problems depending on the method of encoding.

Table 1

| Quantum bit encoding | Characteristics | Problems |
|---|---|---|
| Presence or absence of photon | · Quantum bit is expressed by presence or absence of photon<br>· Generation of photons to be detected (quantum entangled photon pair) is most simple<br>· Quantum bit can be expressed by one path | Determination of light loss is not possible |
| Time | · Quantum bit is expressed by time difference of arrival of photons<br><br>· Quantum bit can be expressed by one path | · There is problem in determination of light loss<br>· Time width of encoding is limited by detector and light source |
| Polarized light | · Quantum bit is expressed by vertical and horizontal linear polarized light<br>· It is possible to implement determination of light loss with high probability<br>· Quantum bit can be expressed by one path | · Photodetector with polarization-dependent detection efficiency cannot take advantage of performance |
| Paths | · Quantum bit is expressed by whether there is photon in either of two paths<br>· Determination of light loss can be implemented with high probability | · Two paths are necessary for expressing quantum bit |

Efficient generation of quantum entanglement requires elimination of erroneous measurements. Since the largest factor that leads to erroneous measurement is loss of photons, it is desirable that encoding of quantum bits is a method that can determine an event of photon loss with high probability. In the encoding method based on the presence or absence of photons and time, since a case where there is no photon on the path is assigned to the quantum bit |0> (within a certain time), there is a problem in distinguishing it from the loss of photons. The method based on the path can determine the loss with high accuracy, but since it is necessary to provide a detection element in each path, the method is likely to be limited in scale. The method using polarized light is also advantageous for loss determination, but some photodetectors have polarization dependency, and thus a device configuration that maximizes detection efficiency is required.

Depending on which of these encoding methods is employed, requirements for the photodetector change. Accordingly, it is necessary to construct a measurement system in consideration of both the encoding method and the characteristics of the photodetector. A superconducting nanowire detector (SNSPD), which is currently regarded as the most practical photodetector, has polarization dependence in detection efficiency, it is necessary to align a polarization direction of light and a direction of the detector so as to maximize the detection efficiency. Further, it is necessary to cool the detection element to a superconducting state, and there are restrictions on enlargement such as using a plurality of elements and detectors. A photodiode, which is another option of the photodetector, has no polarization dependency in detection efficiency, can operate at room temperature and is inexpensive, and thus has an advantage in scalability. However, the detection efficiency is lower than that of SNSPD, and a large number of measurement attempts are required until bell measurement is successful.

(Implementation means)

The quantum entangled light detection system of the present embodiment is a two-photon interference detection system that is capable of using a high-rate quantum entangled light source using quantum bit encoding of polarized light or a path, and includes a mechanism for eliminating erroneous measurements ((a) and (b) below).

(a) A detector including a plurality of elements, which is capable of detecting photon detection timing, or a detector system including a plurality of detectors as a set as individual photodetectors included in the system
(b) Post-selection of bell measurement by making it possible to detect photon detection times by all the light detection elements included in the present, and using the photon detection times is performed.

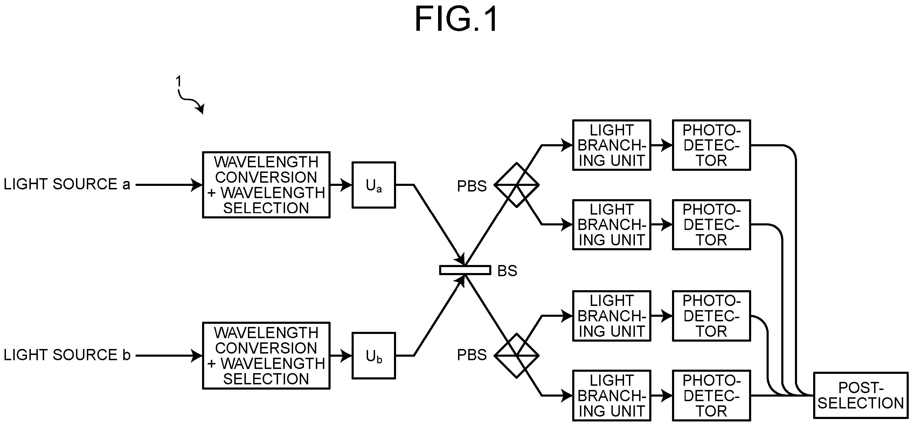

FIG. 1 is a diagram illustrating an example of a quantum entangled light detection system of the present embodiment. FIG. 1 illustrates a detection system 1 to which polarization quantum bit encoding is applied as an example of a quantum entangled light detection system of the present embodiment.

(Effects)

According to the present embodiment, it is possible to increase the number of times of quantum entanglement trials per unit time by using a detector including a plurality of elements or a detector system including a plurality of detectors as a set as individual photodetectors. In addition, by utilizing quantum bit encoding capable of detecting optical loss and post-selection, it is possible to reduce accidental errors due to optical loss and noise. As a result, by using the quantum entangled light detection system of the present embodiment, efficiency of quantum entanglement formation per unit time can be improved.

The outline of the present embodiment has been described above, and the present embodiment will be described in detail below. Hereinafter, the quantum entangled light detection system of the standard embodiment is simply referred to as a detection system. Note that the detection system may be rephrased as a measurement device or the like.

<1-2. Method for Implementing Quantum Entangled Light Detection>

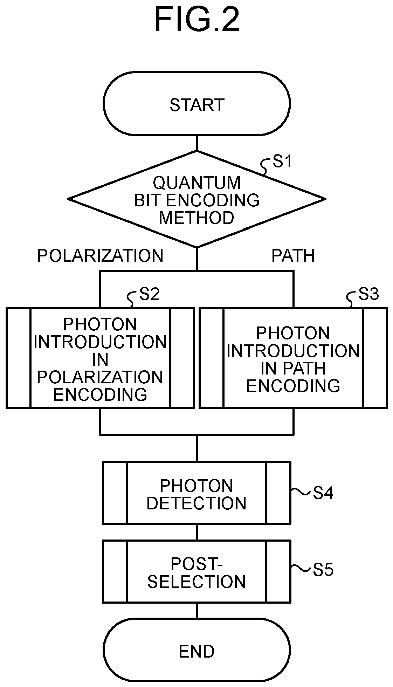

First, a method for implementing quantum entangled light detection will be described. FIG. 2 is a flowchart illustrating a method of quantum entangled light detection of the present embodiment. For example, the detection system 1 executes processing as illustrated in steps S1 to S5 in FIG. 2. An outline of each block will be described below.

(Photon introduction: corresponding to steps S1 to S3)

The detection system 1 introduces input quantum entangled light to a photon detector. Photon introduction of the present embodiment includes any one of the following quantum bit encoding methods.

· Polarization Encoding
· Path Encoding

A configuration example for implementing each of the above will be described in <1-4. Example of Method for Implementing Present Embodiment Due to Difference in Quantum Bit Encoding>. Further, each of the above implementation methods is described in <1-5. Method for Implementing Photon Introduction in Polarization Encoding> or <1-6. Method for Implementing Photon Introduction in Path Encoding>. However, other encoding methods of quantum bits, which are not explicitly described below, may be applied to the quantum entangled light detection system of the present embodiment as long as the present embodiment is applicable.

(Photon detection: corresponding to step S4)

The detection system 1 detects quantum entangled light. Specific implementation methods are described in <1-7. Method for Implementing Photon Detection>, <1-8. Method for Implementing Isolation>, and <1-9. Example of Method for Implementing Photodetector>.

(Post-selection: corresponding to step S5)

The detection system 1 performs post-selection of selecting only an event in which two light beams are simultaneously detected from information of photon detection. In addition, when quantum communication is performed, a bell state between nodes is determined by this block. A specific implementation method is illustrated in <1-10. Method for Implementing Post-Selection>. A configuration that can be taken by each functional unit of the light detection and the post-selection is described in <1-11. Configuration that Can Be Taken by Respective Functional Units of Light Detection and Post-Selection>.

<1-3. Application Example of Present Embodiment>

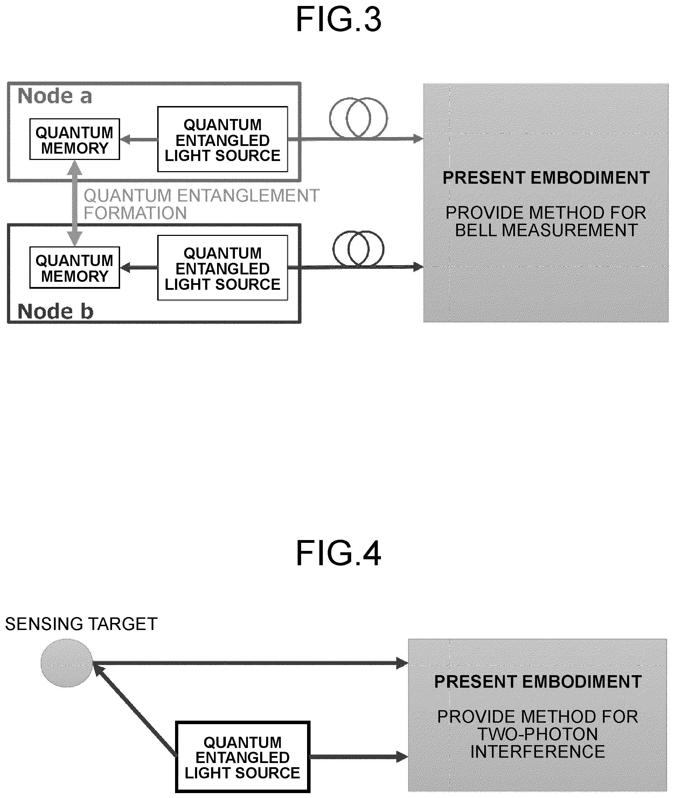

FIG. 3 is a diagram illustrating an application example of the present embodiment to quantum communication. The present embodiment provides a method for performing bell measurement when it is desired to form a quantum entanglement between quantum memories between remote nodes. Note that a detailed description, examples, and the like of this point will be described later.

FIG. 4 is a diagram illustrating an application example of the present embodiment to quantum sensing. The present embodiment provides a method for two-photon quantum interference in sensing using a photon pair in a quantum entanglement state. Note that a detailed description, examples, and the like of this point will be described later.

<1-4. Example of Method for Implementing Present Embodiment Due to Difference in Quantum Bit Encoding>

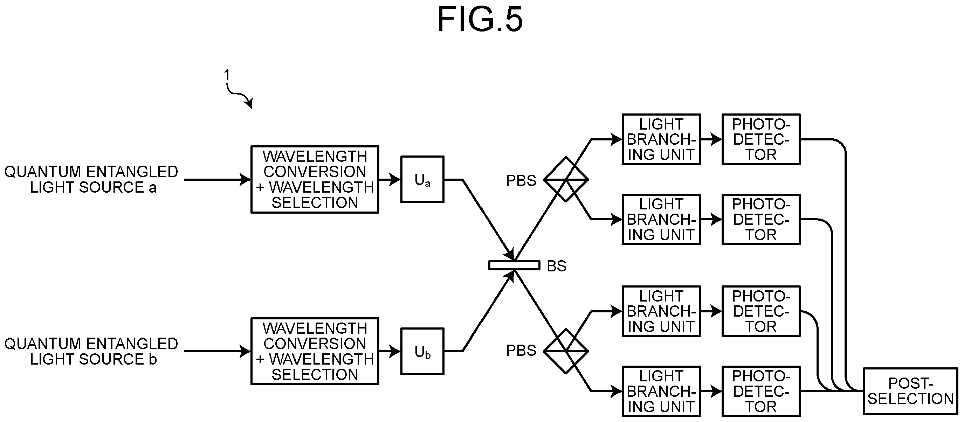

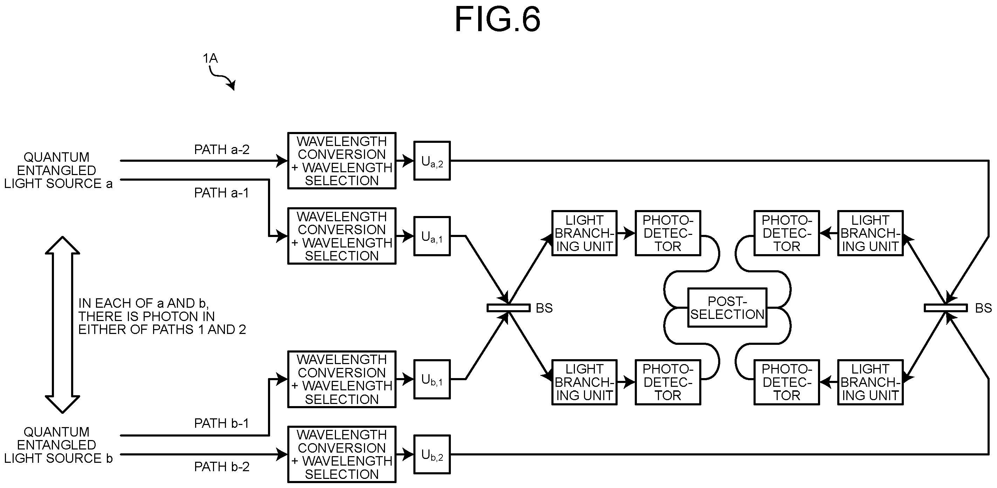

FIG. 5 is a diagram illustrating an example of a method for implementing the present embodiment in the case of polarization encoding. Further, FIG. 6 is a diagram illustrating an example of a method for implementing the present embodiment in a case of path encoding. Note that descriptions in the drawings are as follows.

$U_X$: Unitary conversion of light input from light source X
$U_{X,Y}$: Unitary conversion of light input from light source X and path Y
BS: beam splitter
PBS: polarizing beam splitter
Wavelength conversion: wavelength conversion of input light
Wavelength selection: selectively transmitting converted wavelength
Photodetector: single photon or photon number detector
Post-selection: simultaneous detection and bell state determination of input photons from two light sources

Detection systems 1 and 1A illustrated in FIGS. 5 and 6 are a system that receives quantum entangled light from one or more paths, and includes one or more BSs that causes interference of the quantum entangled light, a light receiving element provided corresponding to respective paths branched by a plurality of splitters (BS and/or PBS) including at least the above BS, and a measurement instrument that detects respective detection timings of photons in the plurality of light receiving elements.

Specifically, the detection system 1 illustrated in FIG. 5 is a system that receives quantum entangled light, and includes a beam splitter that causes interference of the quantum entangled light, a plurality of PBSs that branches, in a polarization state, the quantum entangled light after the interference by the BS, light receiving elements provided corresponding to respective paths branched by the PBS, and a measurement instrument that detects respective detection timings of photons in the plurality of light receiving elements.

In addition, the detection system 1A illustrated in FIG. 6 is a system that receives quantum entangled light from a plurality of paths, and includes a plurality of BSs that cause interference of the quantum entangled light, light receiving elements provided corresponding to respective paths branched by the BSs, and a measurement instrument that detects respective detection timings of photons in the plurality of light receiving elements.

<1-5. Method for Implementing Photon Introduction in Polarization Encoding>

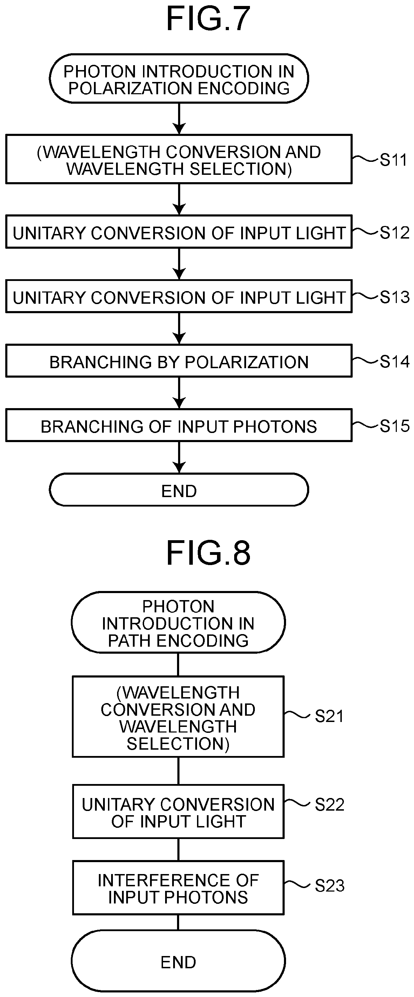

FIG. 7 is a flowchart illustrating a method of photon introduction in the polarization encoding. For example, the detection system 1 executes processing as illustrated in steps S11 to S15 in FIG. 7. The connection of components implementing the function of each block may be implemented by a free space, an optical cable, or an optical circuit. Each block of the flowchart will be described below.

(Wavelength conversion and wavelength selection: corresponding to step S11)

The detection system 1 may perform wavelength conversion of the input light at any position before photon interference only when the polarization state of the input light is not changed. Examples of wavelength conversion include wavelength conversion by a secondary nonlinear optical effect using bulk crystals as described below, or a method for performing wavelength conversion in a waveguide using these crystals.

· LN: LiNbO3

· LT: LiTaO3

· KTP: KTiOPO4

· PPLN: Periodically Poled Lithium Niobate

· PPMgLN: Periodically Poled Magnesium Oxide doped Lithium Niobate

(Unitary conversion of input light: corresponding to step S12)

The detection system 1 performs unitary conversion to cause two input light beams to interfere with each other by a beam splitter (BS). The mechanism for the unitary conversion may be installed on either or both of the two optical paths.

Examples include, for each type of conversion:

· Phase conversion: implemented by adjusting an optical path length by a phase shifter, a length-adjusted optical cable, or a delay by a mirror.

· Basis conversion: implemented by converting the polarization of the light from vertical or horizontal to clockwise or counterclockwise (or inverse conversion thereof) by a wave plate.

The wavelength after conversion may be both shorter and longer than the input light due to the circumstance of two-photon interference. As a method for converting the input light into a short wavelength, there is second harmonic generation (SHG) or sum frequency generation (SFG). As a method for converting the input light into a long wavelength, there is difference frequency generation (DFG).

After the wavelength conversion, a mechanism for selecting the wavelength of light may be introduced. Examples include implementation by a high pass filter (HPF), a low pass filter (LPF), or a band pass filter (BPF).

(Interference of input photons: corresponding to step S13)

The detection system 1 causes two input light beams to interfere with each other by the two-input/two-output BS, and makes it impossible to determine from which input path the light beams have arrived. Examples include implementation by BS that stochastically divides light into two paths or PBS (polarizing BS) in which wave plates are installed before and after four inputs and outputs.

(Branching by polarization: corresponding to step S14)

The detection system 1 causes two photons interfered by the previous BS/PBS to be branched in a polarization state. Examples include implementation with PBS.

(Branching of input photons: corresponding to step S15)

The detection system 1 executes it. The photons branched by polarization are further branched or diffused to branch the input photons. Examples include an optical divider, a lens that diffuses light, or a combination thereof.

<1-6. Method for Implementing Photon Introduction in Path Encoding>

FIG. 8 is a flowchart illustrating a method of photon introduction in the path encoding. For example, the detection system 1A executes processing illustrated in steps S21 to S23 in FIG. 8. The components that perform the functions of the blocks and the connections of the components are similar to the configurations described in <1-5. Method for Implementing Photon Introduction in Polarization Encoding> unless otherwise specified. Each block of the flowchart will be described below.

(Wavelength conversion and wavelength selection: corresponding to step S21)

The wavelength conversion may be performed at any position in the flowchart illustrated in FIG. 8. The wavelength after conversion may be both shorter and longer than the input light. In addition, a mechanism for selecting a wavelength of light to be input to the photodetector after wavelength conversion may be introduced.

(Unitary conversion of input light: corresponding to step S22)

The detection system 1A performs unitary conversion in order to cause the two input light beams to interfere with each other at the BS. The mechanism for unitary conversion may be installed on either or both of the two optical paths.

(Interference of input photons: corresponding to step S23)

The detection system 1A causes two input light beams to interfere with each other by the two-input/two-output BS, and makes it impossible to determine from which input path the light beams have arrived. Examples include BSs that stochastically split light into two paths.

<1-7. Method for Implementing Photon Detection>

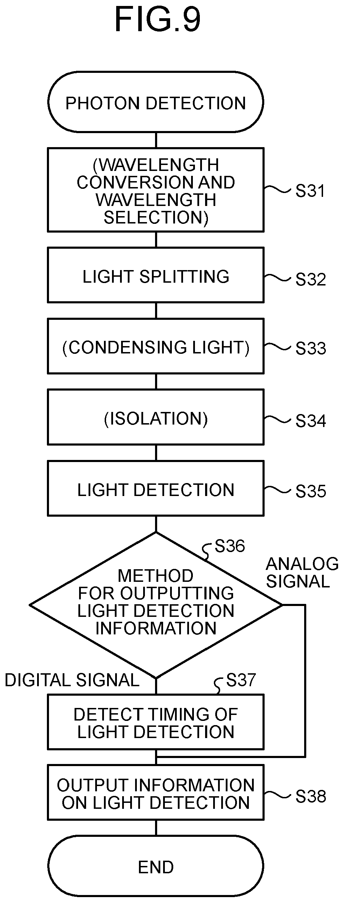

FIG. 9 is a flowchart illustrating a method of light detection. For example, the detection systems 1 and 1A execute processing illustrated in steps S31 to S37 in FIG. 9. Each block of the flowchart will be described below.

(Wavelength conversion and wavelength selection: corresponding to step S31)

The detection systems 1 and 1A may perform wavelength conversion of the input light at any position before the light detection in order to increase the detection efficiency of the input light or to enable the input light to be detected. Examples include a method for converting light such as a communication wavelength band that cannot be detected by Si into a wavelength that can be detected by Si when the light receiving element of the photodetector is Si. As a method of wavelength conversion in this case, there is SHG or SFG described in <1-5. Method for Implementing Photon Introduction in Polarization Encoding>.

(Light branching: corresponding to step S32)

The detection systems 1 and 1A introduce input light into a plurality of spatially separated elements of a photodetector. Examples include a method in which a plurality of optical fibers is melted or branched by a waveguide of an optical circuit.

(Condensation: corresponding to step S33)

A mechanism for condensing light input to the photodetector may be introduced. Examples include a lens that condenses light on the plurality of elements of the photodetector, or an on-chip lens formed on each element.

(Isolation: corresponding to step S34)

An isolation mechanism may be introduced so that crosstalk of input light does not occur between elements of the photodetector. An implementation method will be described later in <1-8. Method for Implementing Isolation>.

(Light detection: corresponding to step S35)

The detection systems 1 and 1A detect input light. At this time, the detection systems 1 and 1A may perform detection using a single photon detection unit or may perform detection using a photon number detection unit. Any of the detection units may be a detector including a plurality of light detection elements, or may be a detector system including a plurality of independent detectors.

(Time acquisition of light detection: corresponding to steps S35 and S36)

In a case where information of light detection is output by digital communication to a signal processing device that performs the post-selection, the detection systems 1 and 1A acquire a time at which light is detected. Examples include a method in which a common timing clock is used in all the photodetectors included in the detection systems 1 and 1A, and a time is obtained from a counter associated with the clock.

(Output of information of light detection: corresponding to step S37)

The detection systems 1 and 1A output information of light detection to the signal processing device that performs the post-selection. Examples of the case of outputting information by a digital signal include a method of outputting a time at which light is detected and an address of an element as a data packet. Examples of the case of outputting information from an analog signal include a method of externally outputting intensity of a light reception signal of an element via an analog cable or the like in a form in which all the elements included in the detection systems 1 and 1A can be uniquely specified.

<1-8. Method for Implementing Isolation>

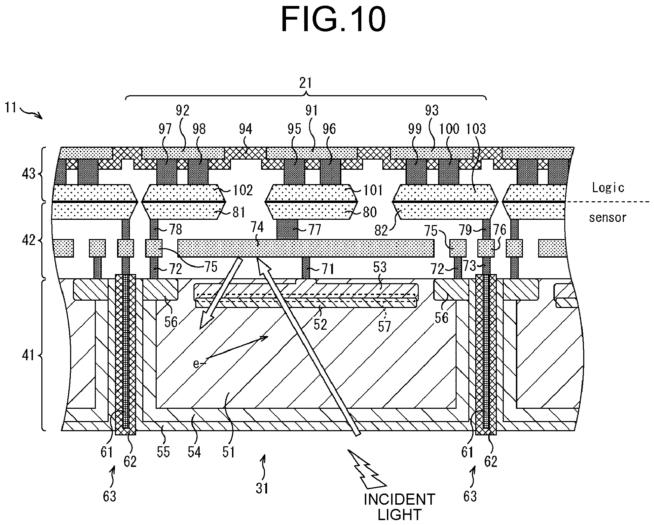

Examples include a pixel structure for preventing leakage of input light from an adjacent element, and a method of providing a light-shielding wall between elements. FIG. 10 is a diagram illustrating a specific example of isolation. In the example illustrated in FIG. 10, a structure in which a semiconductor substrate on which an avalanche photodiode element is formed is insulated and separated from other adjacent pixels is introduced. Note that reference numerals in the drawings mean the following.

11: sensor chip, 12: pixel array unit, 13: bias voltage applying unit, 21: single photon avalanche diode (SPAD) pixel, 31: SPAD element, 32: p-type metal-oxide-semiconductor field-effect transistor (MOSFET), 33: complementary metal oxide semiconductor (CMOS) inverter, 41: sensor substrate, 42: sensor-side wiring layer, 43: logic-side wiring layer, 51: N-well, 52: P-type diffusion layer, 53: N-type diffusion layer, 54: hole accumulation layer, 55: pinning layer, 56: high-concentration P-type diffusion layer, 57: avalanche multiplication region, 61: metal film, 62: insulating film, 63: interpixel separation unit, 71 to 73: contact electrode, 74 to 76: metal wiring, 77 to 79: contact electrode, 80 to 82: metal pad, 91 to 93: electrode pad, 94: insulating layer, 95 to 100: contact electrode, 101 to 103: metal pad electrode.

<1-9. Example of Method for Implementing Photodetector>

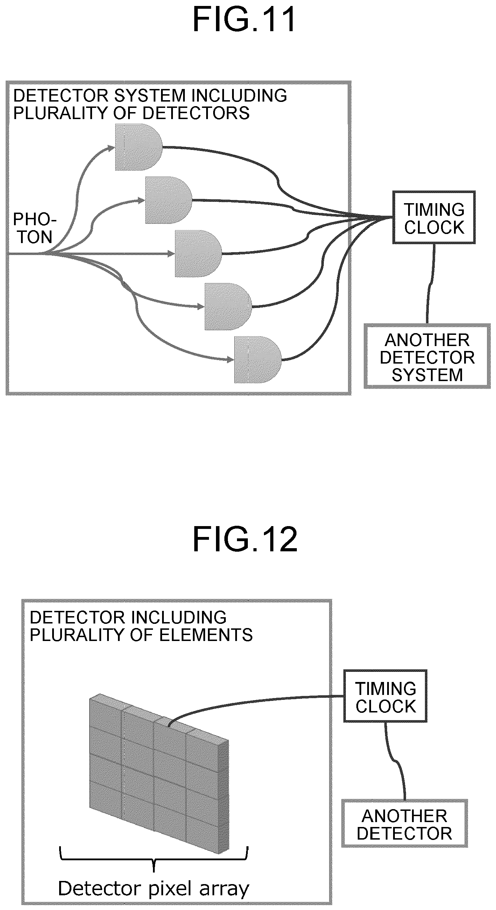

FIGS. 11 and 12 are diagrams each illustrating an example of a device that issues a timing clock to the outside of the detector. FIG. 11 is an example of a detector system (hereinafter also simply referred to as a detector) in which a plurality of detectors is integrated, and FIG. 12 is an example of a detector including a plurality of elements. FIGS. 11 and 12 illustrate how time is synchronized between the detectors.

As a means for synchronizing time between the detectors, a configuration other than those described above may be applied. For example, a function that requires preliminary preparation such as training or calibration before measurement may be introduced.

The detector or detector element may be configured to detect a single photon or the number of photons. In addition, there may be a difference in characteristics (for example, a material, a composition, and a shape) among the plurality of detectors. Further, the detector may have a function (for example, cooling function and bias variable function) for improving or changing characteristics of the detector.

<1-10. Method for Implementing Post-Selection>

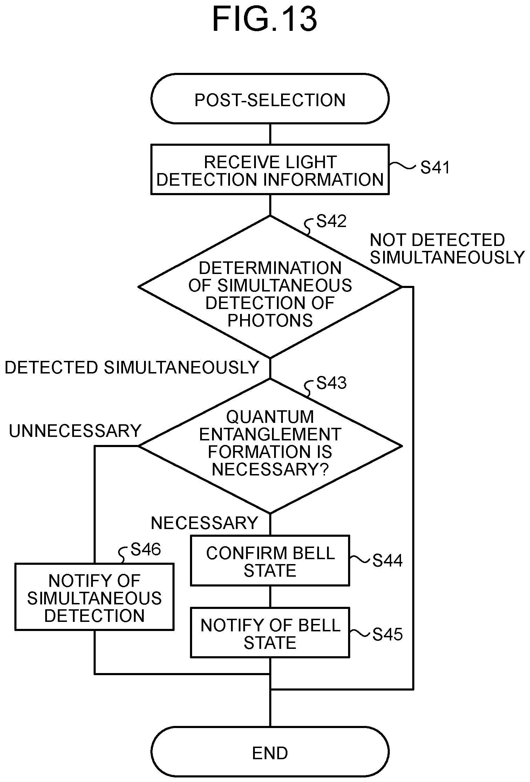

FIG. 13 is a flowchart illustrating a method of the post-selection. Each block of the flowchart will be described below. For example, the detection systems 1 and 1A execute processing illustrated in steps S31 to S37 in FIG. 9. The following processing is executed by a signal processing device (computer) included in the detection systems 1 and 1A.

(Reception of light detection information: corresponding to step S41)

A signal processing device that performs the post-selection receives light detection information from a photodetector. Examples include a method of receiving a time at which light is detected by a digital signal and an address of an element as a data packet, and a method of receiving strength of an output signal in a form in which the element address can be specified by an analog signal.

(Determination of simultaneous detection of photons: corresponding to step S42)

The signal processing device determines whether photons have been detected simultaneously (whether two photons have been detected within the time resolution of the detector). Examples of the case of receiving information of photon detection as a digital signal include a method of determining simultaneous detection from information of time of light detection included in a data packet. Examples of the case of receiving the information as an analog signal include a method of performing balance type measurement for calculating a difference between outputs of different elements in a signal processing device and determining simultaneous detection.

(Notification of simultaneous detection: corresponding to step S46)

The user of the simultaneous detection information is notified of the success of the simultaneous detection. Examples include a method of notifying an external device via the Internet, a local area network (LAN), or the like, and a method of notifying software in a signal processing device that performs the post-selection via an application program interface.

(Confirmation of bell state: corresponding to step S44)

When the present embodiment is used for quantum communication, a bell state is determined in order to form a quantum entanglement state. Examples of the implementation method include a method of determining which one of the four bell states is present from the address of the element that has detected light. Note that multiple entanglements such as a GZH state and a cluster state may be used as a variation of the quantum entanglement to be formed.

(Notification of bell state: corresponding to step S45)

The node in which the quantum entanglement is desired to be formed is notified of the determined bell state. Examples include notification to an external device via the Internet, a LAN, or the like.

<1-11. Configuration that Can Be Taken by Respective Functional Units of Light Detection and Post-Selection>

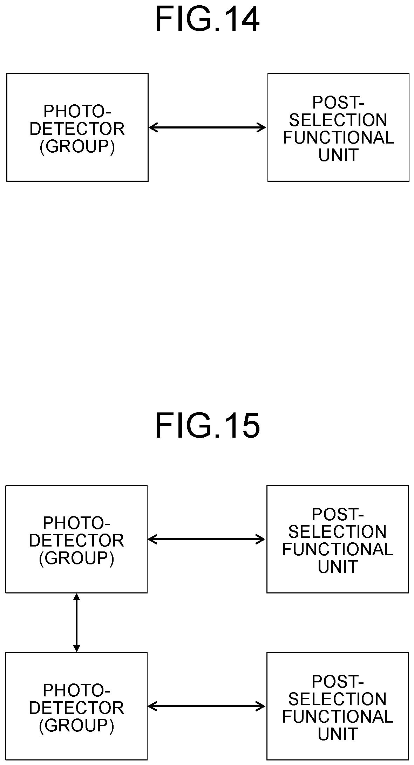

Various configurations can be employed as functional units of the photon detection and the post-selection. FIGS. 14 and 15 are diagrams illustrating modification examples of the photon detector (group) and the post-selection functional unit. For example, the photon detector (group) and the post-selection functional unit may be mixedly mounted on the same chip, or may be divided and mounted on different chips and bonded. In addition, the photon detector (group) and the post-selection functional unit may be made into different packages and communicated. Further, communication may be performed among a plurality of photon detectors (groups). (For example, correction information, sharing of information regarding detection, and the like)

<1-12. Configuration and Processing Example in Polarization Encoding>

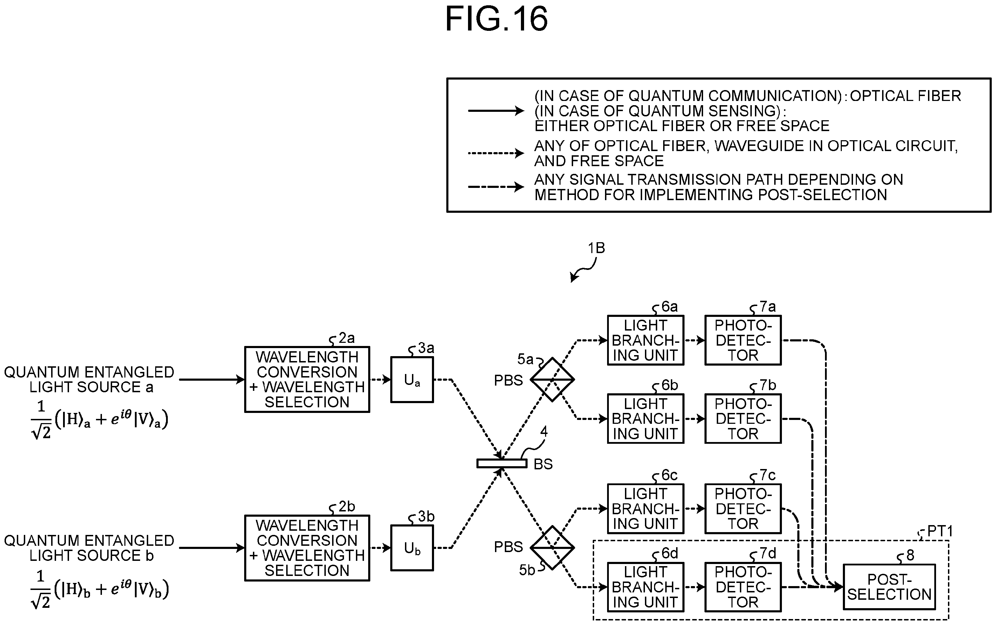

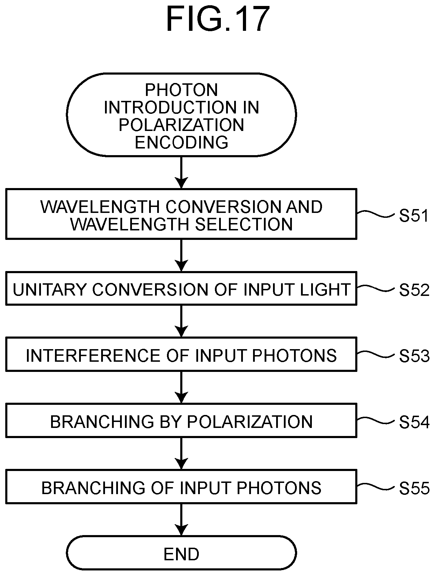

A configuration and a processing example in the polarization encoding will be described below with reference to FIGS. 16 and 17. FIG. 16 is a diagram illustrating an example of a configuration of the present embodiment in a case of the polarization encoding. FIG. 17 is a flowchart illustrating a method of photon introduction in the polarization encoding. Note that description of points similar to those described above will be omitted as appropriate.

First, a configuration example of a detection system 1B in the polarization encoding will be described with reference to FIG. 16. The detection system 1B illustrated in FIG. 16 receives quantum entangled light from one or more paths. For example, the detection system 1B has a configuration in which a light branching unit is arranged before each light detection unit of the detection system 1 illustrated in FIG. 5, and a processing unit for wavelength conversion + wavelength selection is arranged before a beam splitter. In the detection system 1B, a first processing unit 2a and a second processing unit 3a corresponding to a path from a quantum entangled light source a and a first processing unit 2b and a second processing unit 3b corresponding to a path from a quantum entangled light source b are arranged before a beam splitter 4.

Note that, in a case where the first processing unit 2a, the first processing unit 2b, and the like are not particularly distinguished, they are collectively referred to as a first processing unit 2. Further, in a case where the second processing unit 3a, the second processing unit 3b, and the like are not particularly distinguished, they are collectively referred to as a second processing unit 3.

Further, the detection system 1B includes the beam splitter 4, and the detection system 1B includes two polarizing beam splitters 5a and 5b, four light branching units 6a, 6b, 6c, and 6d, four photodetectors 7a, 7b, 7c, and 7d, and a post-selection 8. Note that in a case where the polarizing beam splitters 5a and 5b and the like are not particularly distinguished, they are collectively referred to as a polarizing beam splitter 5. Further, in a case where the light branching units 6a, 6b, 6c, 6d, and the like are not particularly distinguished, they are collectively referred to as a light branching unit 6. Furthermore, in a case where the photodetectors 7a, 7b, 7c, 7d, and the like are not particularly distinguished, they are collectively referred to as a photodetector 7.

The detection system 1B illustrated in FIG. 16 includes the beam splitter 4, photodetectors 7 provided corresponding to respective paths branched by the beam splitter 4 and the polarizing beam splitter 5, a plurality of light branching units 6 that branch light to be introduced into each of the plurality of photodetectors 7, and the post-selection 8 that detects respective detection timings of photons in the plurality of photodetectors 7.

The first processing unit 2 executes processing on the quantum entangled light before branching by the beam splitter 4. The first processing unit 2 executes at least one processing of wavelength conversion or wavelength selection for the quantum entangled light. The second processing unit 3 executes processing on the quantum entangled light before branching by the beam splitter 4. The second processing unit 3 executes unitary conversion.

The beam splitter 4 causes interference of the quantum entangled light. For example, the beam splitter 4 is an optical component that divides incident light into two light beams at a predetermined division ratio. For example, the polarizing beam splitter 5 is an optical element that separates incident light into S-polarized light and P-polarized light. The photodetectors 7 are provided corresponding to respective paths branched by the beam splitter 4 and the polarizing beam splitter 5. The post-selection 8 detects respective detection timings of photons in the plurality of photodetectors 7.

The light branching unit 6 branches light to be introduced into each of the plurality of photodetectors 7. The light branching unit 6 is an element that branches or diffuses light to be introduced into the photodetector 7. Note that a detailed example of the configuration of the light branching unit 6 will be described later.

Here, the type of the line to be connected between the components in FIG. 16 indicates a connection mode between the components. The connection corresponding to the solid line between the quantum entangled light sources a and b and the first processing unit 2 is implemented by an optical fiber. For example, a solid line between the quantum entangled light sources a and b and the first processing unit 2 indicates that light from the light source is input (incident) to the detection system 1 by the optical fiber. As described above, in a case where the detection systems 1, 1A, and 1B, or the like is applied to quantum communication, light from the quantum entangled light source is introduced into the system through an optical fiber. Note that, in a case where the detection systems 1, 1A, and 1B, and the like are not particularly distinguished, they are collectively referred to as a detection system 1.

As described above, in a case where the detection system 1B is applied to quantum communication, the connection corresponding to the solid line between the quantum entangled light sources a and b and the first processing unit 2 is implemented by the optical fiber. Note that, in a case where the detection system 1B is applied to the quantum sensing described later, the connection corresponding to the solid line between the quantum entangled light sources a and b and the first processing unit 2 is implemented by either an optical fiber or a free space.

Furthermore, the connection corresponding to the dotted line between the first processing unit 2 and the photodetector 7 is implemented by any of an optical fiber, a waveguide in an optical circuit, and a free space. As described above, the path for transmitting light between the components in the detection system 1 may be any of an optical fiber, a waveguide in an optical circuit, and a free space.

In addition, the connection corresponding to a one-dot chain line between the photodetector 7 and the post-selection 8 is implemented by any signal transmission path depending on the method for implementing the post-selection. As described above, the path for introducing the detection signal from the photodetector 7 in the detection system 1 into the post-selection 8 may be any signal transmission path depending on the method for implementing the post-selection 8.

Next, a processing example by the detection system 1B will be described with reference to FIG. 17. The detection system 1B executes processing as illustrated in steps S51 to S55. In photon introduction in the polarization encoding, light in an overlapping state of two pulses illustrated below each light source in FIG. 16, for example, is input from the two quantum entangled light sources a and b.

The detection system 1B executes wavelength conversion and wavelength selection (step S51). The processing of step S51 corresponds to step S11 in FIG. 7. For example, in the detection system 1B, the first processing unit 2 executes the processing of step S51. Note that, as illustrated in step S11 in FIG. 7 in parentheses, the wavelength conversion and the wavelength selection are arbitrary processing, and may be executed or may not be executed as necessary. Further, the detection system 1B executes unitary conversion of the input light (step S52). The processing of step S52 corresponds to step S12 in FIG. 7. For example, the detection system 1B executes the processing of step S52 by the second processing unit 3.

Then, the detection system 1B executes interference of input photons (step S53). The processing of step S53 corresponds to step S13 in FIG. 7. For example, the detection system 1B executes the processing of step S53 by the beam splitter 4. Then, the detection system 1B executes branching by polarization (step S54). The processing of step S54 corresponds to step S14 in FIG. 7. For example, the detection system 1B executes the processing of step S54 by the polarizing beam splitter 5.

Then, the detection system 1B executes branching of the input photons (step S55). The detection system 1B further branches or diffuses the photons branched by the polarized light, and introduces the photons into the photodetector 7. Examples include an optical divider, a lens that diffuses light, or a combination thereof. For example, the detection system 1B executes the processing of step S55 by the light branching unit 6.

<1-13. Configuration and Processing Example in Path Encoding>

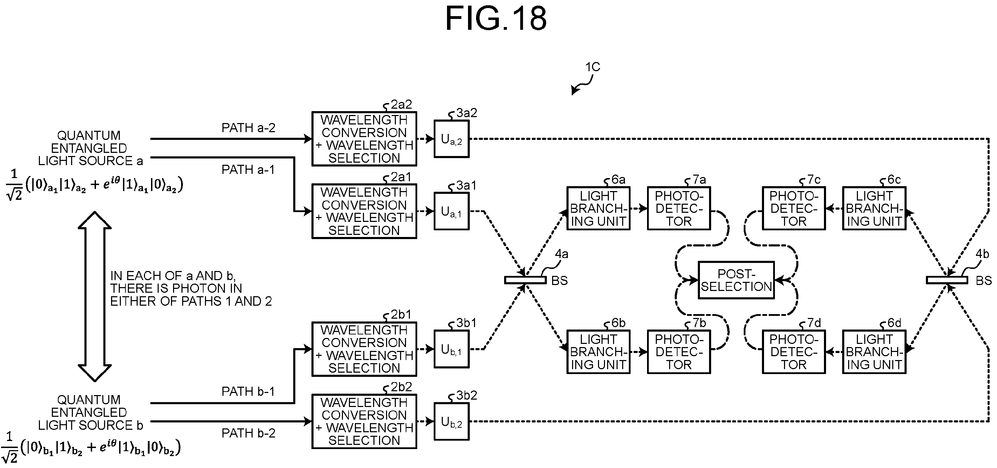

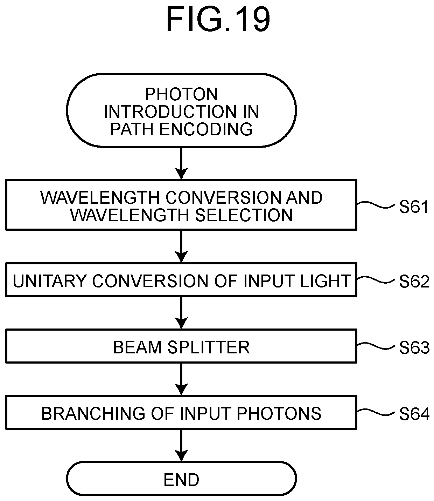

A configuration and a processing example in the path encoding will be described below with reference to FIGS. 18 and 19. FIG. 18 is a diagram illustrating an example of a configuration of the present embodiment in a case of the path encoding. FIG. 19 is a flowchart illustrating a method of photon introduction in the path encoding. Note that description of points similar to those described above will be omitted as appropriate.

First, a configuration example of a detection system 1C in the path encoding will be described with reference to FIG. 18. The detection system 1C illustrated in FIG. 18 receives quantum entangled light from one or more paths. For example, the detection system 1C has a configuration in which a light branching unit is arranged before each light detection unit of the detection system 1 illustrated in FIG. 6, and a processing unit for wavelength conversion + wavelength selection is arranged before a beam splitter. In the detection system 1C, a first processing unit 2a1 and a second processing unit 3a1 corresponding to a path a-1 from the quantum entangled light source a and a first processing unit 2b1 and a second processing unit 3b1 corresponding to a path b-1 from the quantum entangled light source b are arranged before a beam splitter 4a. In the detection system 1C, a first processing unit 2a2 and a second processing unit 3a2 corresponding to a path a-2 from the quantum entangled light source a and a first processing unit 2b2 and a second processing unit 3b2 corresponding to a path b-2 from the quantum entangled light source b are arranged before a beam splitter 4b.

Note that, as described above, in a case where the first processing units 2a1, 2a2, 2b1, 2b2, and the like are not particularly distinguished, they are collectively referred to as a first processing unit 2, and in a case where the second processing units 3a1, 3a2, 3b1, 3b2, and the like are not particularly distinguished, they are collectively referred to as a second processing unit 3. Further, in a case where the beam splitters 4a and 4b and the like are not particularly distinguished, they are collectively referred to as a beam splitter 4.

The detection system 1C illustrated in FIG. 18 includes the beam splitter 4, the photodetectors 7 provided corresponding to respective paths branched by the beam splitter 4 and the polarizing beam splitter 5, the plurality of light branching units 6 that branch light to be introduced into each of the plurality of photodetectors 7, and the post-selection 8 that detects respective detection timings of photons in the plurality of photodetectors 7.

Here, the type of the line to be connected between the components in FIG. 18 indicates a connection mode between the components. Note that the relationship between the connection modes of the types of lines is similar to that in FIG. 16, and thus a detailed description thereof will be omitted. For example, in a case where the detection system 1C is applied to quantum communication, the connection corresponding to the solid line between the quantum entangled light sources a and b and the first processing unit 2 is implemented by an optical fiber. Note that, in a case where the detection system 1C is applied to the quantum sensing described later, the connection corresponding to the solid line between the quantum entangled light sources a and b and the first processing unit 2 is implemented by either an optical fiber or a free space.

Next, a processing example by the detection system 1C will be described with reference to FIG. 19. The detection system 1C executes processing as illustrated in steps S61 to S64. In photon introduction in the path encoding, light in an overlapping state of two pulses illustrated below each light source in FIG. 18, for example, is input from the two quantum entangled light sources a and b.

The detection system 1C executes wavelength conversion and wavelength selection (step S61). The processing of step S61 corresponds to step S21 in FIG. 7. For example, the detection system 1C executes the processing of step S61 by the first processing unit 2. Note that, as illustrated in step S21 in FIG. 7 in parentheses, the wavelength conversion and the wavelength selection are arbitrary processing, and may be executed or may not be executed as necessary. Further, the detection system 1C executes unitary conversion of the input light (step S62). The processing of step S62 corresponds to step S22 in FIG. 7. For example, the detection system 1C executes the processing of step S62 by the second processing unit 3.

Then, the detection system 1C executes processing by the beam splitter (step S63). For example, the detection system 1C performs interference of input photons. The processing of step S63 corresponds to step S23 in FIG. 7. For example, the detection system 1C executes the processing of step S63 by the beam splitter 4.

Then, the detection system 1C executes branching of the input photons (step S64). The detection system 1C further branches or diffuses the photons branched by the polarized light, and introduces the photons into the photodetector 7. Examples include an optical divider, a lens that diffuses light, or a combination thereof. For example, the detection system 1C executes the processing of step S64 by the light branching unit 6.

<1-14. Post-Selection Example in Quantum Communication>

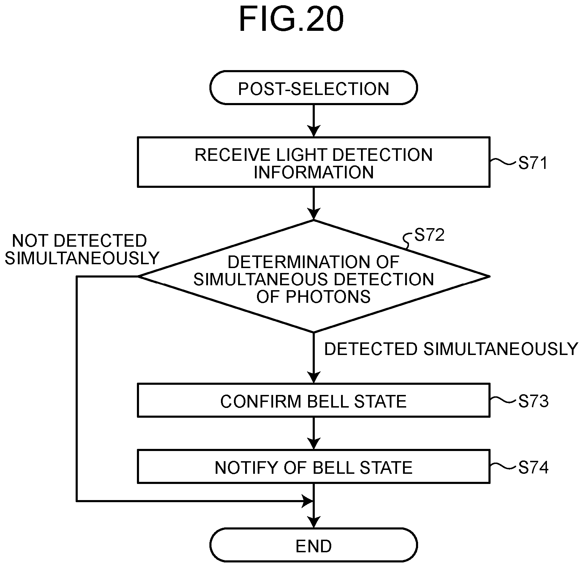

From here, an example of the post-selection in quantum communication will be described with reference to FIG. 20. FIG. 20 is a flowchart illustrating a method of the post-selection in a case of quantum communication. Note that description of points similar to those described above will be omitted as appropriate. Note that the processing illustrated in FIG. 20 may be performed by any detection system 1 such as the detection system 1B, 1C, or the like as long as the processing can be performed.

The detection system 1 executes processing as illustrated in steps S71 to S74 in the post-selection in the quantum communication. For example, the detection system 1 executes processing as illustrated in steps S71 to S74 by the post-selection 8. The detection system 1 executes reception of the light detection information (step S71). The processing of step S71 corresponds to step S41 in FIG. 13.

Then, the detection system 1 executes determination of simultaneous detection of photons (step S72). The processing of step S72 corresponds to step S42 in FIG. 13. When it is determined that photons are not simultaneously detected (step S72: No), the detection system 1 ends the post-selection processing without executing the processing of steps S73 and S74.

When it is determined that photons are simultaneously detected (Step S72: Yes), the detection system 1 executes processing of confirming the bell state (Step S73). The processing of step S73 corresponds to step S44 in FIG. 13. Then, the detection system 1 executes notification of the bell state (step S74). The processing of step S74 corresponds to step S45 in FIG. 13.

In the quantum communication as described above, the detection system 1 can improve the quantum entanglement generation rate by using the photodetectors 7 such as an arrayed detector, and can efficiently generate the quantum entanglement state.

<1-15. Configuration and Processing Example in Photon Presence/Absence Encoding>

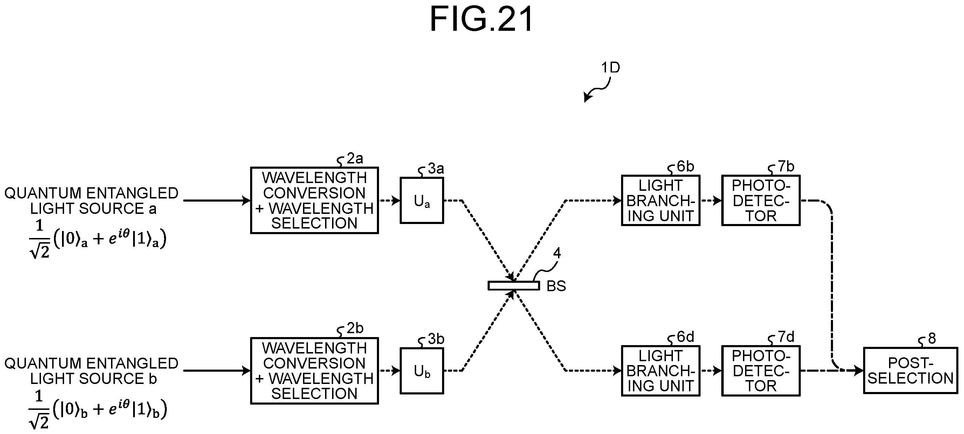

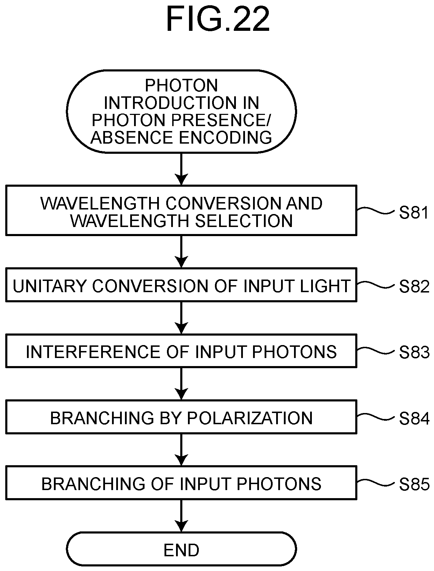

Note that the encoding method is not limited to the above-described polarization encoding and path encoding as long as it is applicable, and any method can be employed. Hereinafter, as a method other than the polarization encoding and the path encoding, photon presence/absence encoding will be described with reference to FIGS. 21 and 22. FIG. 21 is a diagram illustrating an example of a configuration of the present embodiment in a case of the photon presence/absence encoding. FIG. 22 is a flowchart illustrating a method of photon introduction in the photon presence/absence encoding. Note that description of points similar to those described above will be omitted as appropriate.

First, a configuration example of a detection system 1D in the photon presence/absence encoding will be described with reference to FIG. 21. The detection system 1D illustrated in FIG. 21 receives quantum entangled light from one or more paths. For example, the detection system 1D has a configuration in which the polarizing beam splitter is removed from the detection system 1 illustrated in FIG. 5, a light branching unit is arranged before each of the light detection units, and the processing unit for wavelength conversion + wavelength selection is arranged before the beam splitter. In the detection system 1D, the first processing unit 2a and the second processing unit 3a corresponding to the path from the quantum entangled light source a and the first processing unit 2b and the second processing unit 3b corresponding to the path from the quantum entangled light source b are arranged before the beam splitter 4.

The detection system 1D illustrated in FIG. 21 includes the beam splitter 4, the photodetectors 7 provided corresponding to respective paths branched by the beam splitter 4, the plurality of light branching units 6 that branch light to be introduced into each of the plurality of photodetectors 7, and the post-selection 8 that detects respective detection timings of photons in the plurality of photodetectors 7.

Here, the type of the line to be connected between the components in FIG. 21 indicates a connection mode between the components. Note that the relationship between the connection modes of the types of lines is similar to that in FIG. 16, and thus a detailed description thereof will be omitted. For example, in a case where the detection system 1D is applied to the quantum sensing described later, the connection corresponding to the solid line between the quantum entangled light sources a and b and the first processing unit 2 is implemented by either an optical fiber or a free space. Note that, in a case where the detection system 1D is applicable to quantum communication, the connection corresponding to the solid line between the quantum entangled light sources a and b and the first processing unit 2 is implemented by an optical fiber.

Next, a processing example by the detection system 1D will be described with reference to FIG. 22. The detection system 1D executes processing as illustrated in steps S81 to S85. In photon introduction in the photon presence/absence encoding, light in an overlapping state of two pulses illustrated below each light source in FIG. 21, for example, is input from the two quantum entangled light sources a and b.

The detection system 1D executes wavelength conversion and wavelength selection (step S81). The processing of step S81 corresponds to step S11 in FIG. 7. For example, the detection system 1D executes the processing of step S81 by the first processing unit 2. Note that, as illustrated in step S11 in FIG. 7 in parentheses, the wavelength conversion and the wavelength selection are arbitrary processing, and may be executed or may not be executed as necessary. Further, the detection system 1D executes unitary conversion of the input light (step S82). The processing of step S82 corresponds to step S12 in FIG. 7. For example, the detection system 1D executes the processing of step S82 by the second processing unit 3.

Then, the detection system 1D executes interference of input photons (step S83). The processing of step S83 corresponds to step S13 in FIG. 7. For example, the detection system 1D executes the processing of step S83 by the beam splitter 4. Then, the detection system 1D executes branching by polarization (step S84). The processing of step S84 corresponds to step S14 in FIG. 7. Note that the detection system 1D does not need to execute step S84. For example, in a case where the detection system 1D includes the polarizing beam splitter 5, the processing of step S84 is executed by the polarizing beam splitter 5.

Then, the detection system 1D executes branching of the input photons (step S85). The detection system 1D further branches or diffuses the photons branched by the polarized light, and introduces the photons into the photodetector 7. Examples include an optical divider, a lens that diffuses light, or a combination thereof. For example, the detection system 1D executes the processing of step S85 by the light branching unit 6.

<1-16. Configuration and Processing Example in Time Encoding>

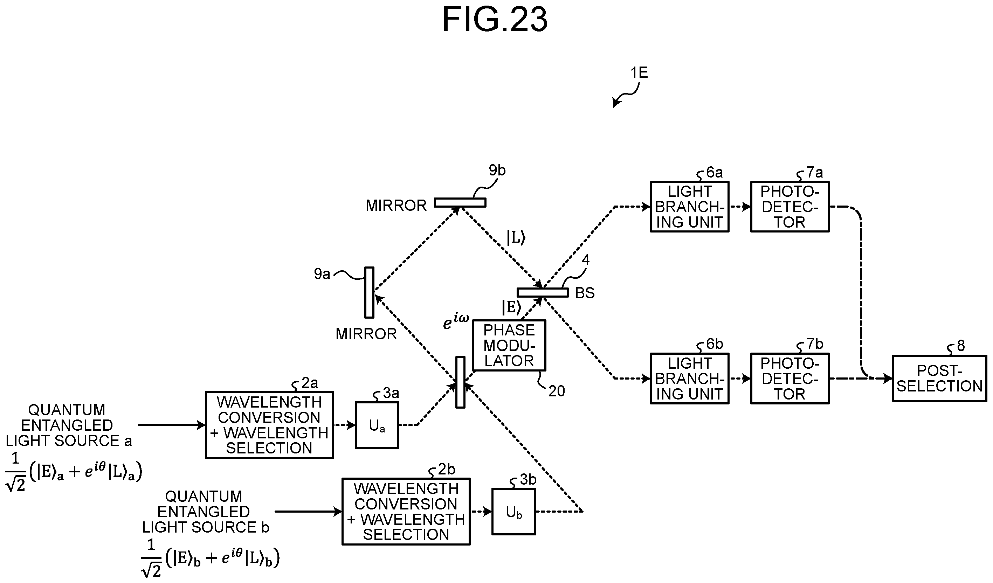

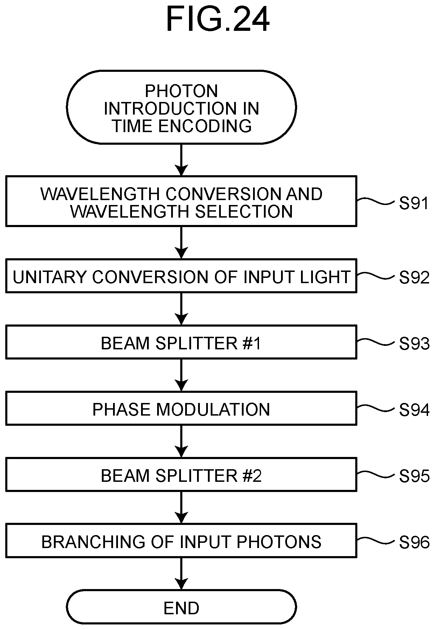

From here, as a method other than the polarization encoding and the path encoding, time encoding will be described with reference to FIGS. 23 and 24. FIG. 23 is a diagram illustrating an example of a configuration of the present embodiment in a case of time encoding. FIG. 24 is a flowchart illustrating a method of photon introduction in the time encoding. Note that description of points similar to those described above will be omitted as appropriate.

First, a configuration example of a detection system 1E in time encoding will be described with reference to FIG. 23. The detection system 1E illustrated in FIG. 23 receives quantum entangled light from one or more paths. For example, the detection system 1E has a configuration in which the polarizing beam splitter is removed from the detection system 1 illustrated in FIG. 5, a mirror and a phase modulator are added, a light branching unit is arranged before each of the light detection units, and a processing unit for wavelength conversion + wavelength selection is arranged before the beam splitter. In the detection system 1E, the first processing unit 2a and the second processing unit 3a corresponding to the path from the quantum entangled light source a and the first processing unit 2b and the second processing unit 3b corresponding to the path from the quantum entangled light source b are arranged before the beam splitter 4.

The detection system 1E illustrated in FIG. 23 includes the beam splitter 4, the photodetectors 7 provided corresponding to respective paths branched by the beam splitter 4, the plurality of light branching units 6 that branch light to be introduced into each of the plurality of photodetectors 7, and the post-selection 8 that detects respective detection timings of photons in the plurality of photodetectors 7.

Further, the detection system 1E includes mirrors 9a and 9b and a phase modulator 20. In a case where the mirrors 9a and 9b and the like are not particularly distinguished, they are collectively referred to as a mirror 9. The mirror 9 is a mirror that reflects photons. The mirror 9 is arranged at a position where light from the beam splitter 4a is reflected and input to the beam splitter 4b. Further, the phase modulator 20 performs phase modulation of one light beam branched by the beam splitter 4a. The phase modulator 20 is arranged in a path between the beam splitter 4a and the beam splitter 4b.

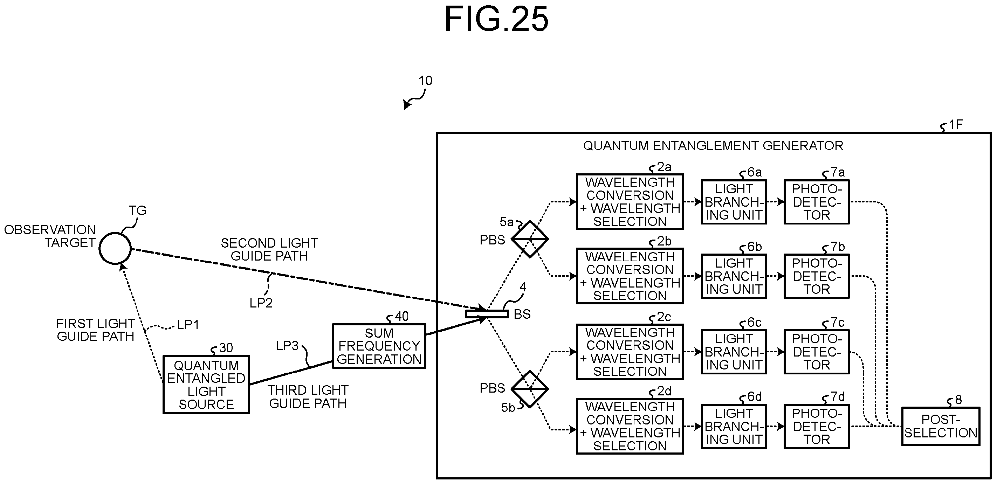

Here, the type of the line to be connected between the components in FIG. 23 indicates a connection mode between the components. Note that the relationship between the connection modes of the types of lines is similar to that in FIG. 16, and thus a detailed description thereof will be omitted. For example, in a case where the detection system 1E is applied to the quantum sensing described later, the connection corresponding to the solid line between the quantum entangled light sources a and b and the first processing unit 2 is implemented by either an optical fiber or a free space. Note that, in a case where the detection system 1E is applicable to quantum communication, the connection corresponding to the solid line between the quantum entangled light sources a and b and the first processing unit 2 is implemented by an optical fiber. Note that only the types of lines in FIGS. 16, 18, 21, and 23 described above indicate connection modes between components, and the types of lines in other drawings (for example, FIG. 25) do not indicate connection modes between components.

Next, a processing example by the detection system 1E will be described with reference to FIG. 24. The detection system 1E executes processing as illustrated in steps S91 to S96. Note that the components that perform the functions of the blocks, the connections of the components, and the like are similar to those described in <1-5. Method for Implementing Photon Introduction in Polarization Encoding> unless otherwise specified. Each block of the flowchart will be described below.

In photon introduction in time encoding, light in an overlapping state of two pulses in time is input from the two quantum entangled light sources a and b as expressed in the following Expressions (1) and (2). For example, Expression (1) corresponds to the quantum entangled light source a, and Expression (2) corresponds to the quantum entangled light source b.

$$\frac{1}{\sqrt{2}}\left(|\text{E}\rangle_a + e^{i\theta}|\text{L}\rangle_a\right) \qquad \cdots (1)$$

$$\frac{1}{\sqrt{2}}\left(|\text{E}\rangle_b + e^{i\theta}|\text{L}\rangle_b\right) \qquad \cdots (2)$$

|E>a in Expression (1) and |E>b in Expression (2) represent temporally early pulses emitted from the quantum entangled light sources a and b, respectively, |L>a in Expression (1) and |L>b in Expression (2) represent pulses emitted later than |E>a and |E>b, respectively, by a certain period of time (equal to or more than the time resolution of the photodetector 7), and $e^{i\theta}$ represents the phase difference components of the two pulses.

(Wavelength conversion and wavelength selection)

The detection system 1E executes wavelength conversion and wavelength selection (step S91). The wavelength conversion may be performed at any position in the flowchart illustrated in FIG. 24. The wavelength after conversion may be both shorter and longer than the input light. In addition, a mechanism for selecting a wavelength of light to be input to the photodetector 7 after wavelength conversion may be introduced. For example, the detection system 1E executes the processing of step S91 by the first processing unit 2.

(Unitary conversion of input light)

The detection system 1E executes unitary conversion of the input light (step S92). For example, the detection system 1E performs unitary conversion to cause two input light beams to interfere with each other at the BS. The mechanism for unitary conversion may be installed on either or both of the two optical paths. For example, the detection system 1E executes the processing of step S92 by the second processing unit 3.

(Beam splitter #1)

The detection system 1E executes processing by the beam splitter #1 (for example, the beam splitter 4a in FIG. 23) (step S93). The detection system 1E branches the light from the light source into two paths, a short optical path E and a long optical path L. For example, the detection system 1E executes the processing of step S93 by the beam splitter 4a.

(Phase modulation)

The detection system 1E executes phase modulation (step S94). The detection system 1E applies the phase modulation $e^{i\omega}$ to one of the paths divided by the beam splitter #1 (a short optical path E in FIG. 23). When a single pulse is input to the beam splitter #1 and this phase modulation is applied, an overlapping state as illustrated in the following Expression (3) is obtained. For example, the detection system 1E executes the processing of step S94 by the phase modulator 20.

$$\frac{1}{\sqrt{2}}\left(e^{i\omega}|\mathrm{E}\rangle + |\mathrm{L}\rangle\right) \qquad \cdots (3)$$

(Beam splitter #2)

The detection system 1E executes processing by the beam splitter #2 (for example, the beam splitter 4b in FIG. 23) (step S95). The detection system 1E multiplexes the light beams branched by the beam splitter #1. For example, the detection system 1E executes the processing of step S95 by the beam splitter 4b.
Here, for example, in the case of photons introduced from the quantum entangled light source a, the multiplexed light is in an overlapping state as illustrated in the following Expression (4).

$$\frac{1}{2}\left(e^{i\omega}|\mathrm{EE}\rangle_a + |\mathrm{EL}\rangle_a + e^{i(\theta+\omega)}|\mathrm{LE}\rangle_a + e^{i\theta}|\mathrm{LL}\rangle_a\right) \qquad \cdots (4)$$

Here, in a case where the pulse time difference of the light source and the time difference due to the optical path after the beam splitter #1 are the same, and adjustment is performed so that $\theta = -\omega$ is satisfied by phase modulation, |EE>a and |LL>a can be temporally separated, and thus are not in an overlapping state. Furthermore, in a case where the light sources are the two quantum entangled light sources a and b, the overlapping state occurring in the beam splitter #2 is expressed by the following Expression (5).

$$\frac{1}{2}\left(|\mathrm{EL}\rangle_a + |\mathrm{LE}\rangle_a + |\mathrm{EL}\rangle_b + |\mathrm{LE}\rangle_b\right) \qquad \cdots (5)$$

Here, since |EL>a and |EL>b, and |LE>a and |LE>b are inseparable, the above can be normalized and expressed as the following Expression (6).

$$\frac{1}{\sqrt{2}}\left(|\mathrm{EL}\rangle + |\mathrm{LE}\rangle\right) \qquad \cdots (6)$$

(Branching of input photons)

The detection system 1E performs branching of the input photons (step S96). The detection system 1E branches or diffuses the photons output from the beam splitter #2 and introduces the photons into the photodetector 7. Examples include an optical divider, a lens that diffuses light, or a combination thereof. For example, the detection system 1E executes the processing of step S96 by the light branching unit 6.

<1-17. Configuration Example in Quantum Sensing>

The detection system 1 described above may be used for the quantum sensing. A configuration example in the case of the quantum sensing will be described with reference to FIG. 25. FIG. 25 is a diagram illustrating an example of a configuration of the present embodiment of the quantum sensing. Hereinafter, a light detection system applied to the quantum sensing is referred to as a sensing system. Note that the sensing system may be rephrased as a measurement device or the like.

First, a configuration example of a sensing system 10 in the quantum sensing will be described with reference to FIG. 25. The sensing system 10 illustrated in FIG. 25 includes a quantum entanglement generator 1F and a quantum entangled light source 30 that outputs at least two photons in a quantum entanglement state. Note that the quantum entanglement generator 1F illustrated in FIG. 25 is merely an example of the configuration of the quantum entanglement generator, and any configuration can be employed as the quantum entanglement generator as long as desired sensing can be performed. The detection system 1 such as the detection system 1 to 1E described above may be used as the quantum entanglement generator of the sensing system 10.

The quantum entanglement generator 1F detects a photon detection timing by the photodetector 7 provided corresponding to the path branched by the at least one beam splitter 4 that causes interference of the quantum entangled light. A quantum entanglement generator 1F illustrated in FIG. 25 includes the photodetectors 7 provided corresponding to respective paths branched by the beam splitter 4 and the polarizing beam splitters 5a and 5b, the light branching unit 6 that branches light to be introduced into the plurality of photodetectors 7, and the post-selection 8 that detects respective detection timings of photons in the plurality of photodetectors 7.

For example, the quantum entanglement generator 1F has a configuration in which a light branching unit is arranged before each of the light detection units of the detection system 1 illustrated in FIG. 5. In the quantum entanglement generator 1F, the first processing units 2a, 2b, 2c, and 2d are after the beam splitter 4. In FIG. 25, each of the four first processing units 2a, 2b, 2c, and 2d is arranged before each of the four light branching units 6a, 6b, 6c, and 6d. Note that, as described above, in a case where the first processing units 2a1, 2a2, 2b1, 2b2, and the like are not particularly distinguished, the first processing units 2a1, 2a2, 2b1, 2b2, and the like are collectively referred to as a first processing unit 2.

After branching by the beam splitter 4, the first processing unit 2 executes processing on the quantum entangled light after the interference by the beam splitter 4. The first processing unit 2 executes at least one processing of wavelength conversion or wavelength selection on the quantum entangled light after interference by the beam splitter 4.

Among a first light guide path LP1 that applies one of the two photons to an observation target TG that is a target (sensing target), a second light guide path LP2 that guides a photon returning from the observation target TG to the beam splitter 4, and a third light guide path LP3 that guides the other of the two photons to the beam splitter 4, the quantum entanglement generator 1F receives light from the second light guide path LP2 and the third light guide path LP3.

The sensing system 10 illustrated in FIG. 25 includes a sum frequency generator 40. The sum frequency generator 40 is arranged in at least one of the second light guide path LP2 or the third light guide path LP3. In FIG. 25, the sum frequency generator 40 is arranged in the third light guide path LP3. The sum frequency generator 40 executes processing related to sum frequency generation.

For example, in a case where the sensing system 10 is used for fluorescence measurement, since energy of photons returned from a target (observation target TG or the like) changes from the time of irradiation, the sum frequency generator 40 is used to equalize energy of two photons entering the BS. For example, a periodically inverted polarized LiNbO crystal or the like may be used for the sum frequency generator 40. The sum frequency generator 40 converts two input light beams into one output light beam by a nonlinear optical effect. In this case, for example, the frequency of the output light of the sum frequency generator 40 is a total value of the input light.

The sensing system 10 implements sensing for detecting reflected light from a target. For example, the sensing system 10 provides a method for two-photon quantum interference in sensing using a photon pair in a quantum entanglement state. The sensing system 10 projects one of the quantum entangled light pair onto the target, and detects the reflected or scattered photon and the other of the photon pair by two-photon quantum interference, thereby implementing highly sensitive sensing.

<1-18. Post-Selection Example in Quantum Sensing>

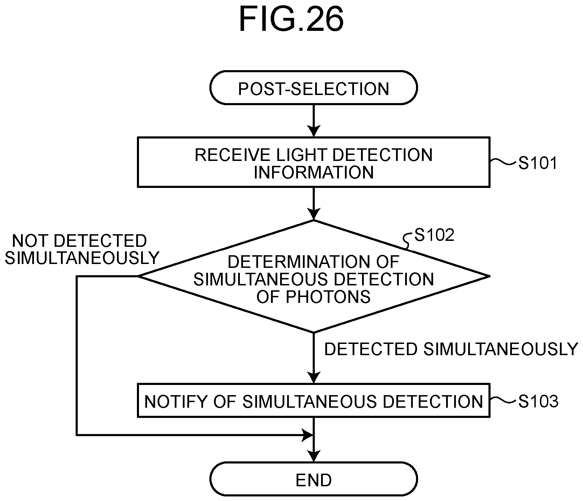

From here, an example of the post-selection in the quantum sensing will be described with reference to FIG. 26. FIG. 26 is a flowchart illustrating a method of the post-selection in a case of the quantum sensing. Note that description of points similar to those described above will be omitted as appropriate. Note that the processing illustrated in FIG. 26 may be performed by the detection systems 1 and 10 or the like as long as the processing can be performed.

The sensing system 10 executes processing as illustrated in steps S101 to S103 in the post-selection in the quantum sensing. For example, the sensing system 10 executes processing as illustrated in steps S101 to S103 by the post-selection 8. The sensing system 10 executes reception of the light detection information (step S101). The processing of step S101 corresponds to step S41 in FIG. 13.

Then, the sensing system 10 executes determination of simultaneous detection of photons (step S102). The processing of step S102 corresponds to step S42 in FIG. 13. When it is determined that photons are not simultaneously detected (step S102: No), the sensing system 10 ends the post-selection processing without executing the processing of step S103.

When it is determined that photons are simultaneously detected (step S102: Yes), the sensing system 10 executes notification of simultaneous detection (step S103). The processing of step S103 corresponds to step S46 in FIG. 13.

<1-19. Application Example of Quantum Sensing>

The quantum sensing by the sensing system 10 may be applied to any sensing. For example, the quantum sensing by the sensing system 10 may be applied to sensing targeting a fluorescent substance. For example, the quantum sensing by the sensing system 10 may be applied to sample analysis. For example, the quantum sensing by the sensing system 10 may be applied to single pixel imaging. For example, the quantum sensing by the sensing system 10 may be applied to an imaging system.

Hereinafter, specific examples of application of the sensing system as described above to the quantum sensing will be described as first to fourth application examples. Note that the first to fourth application examples described below are merely examples, and the sensing system may be applied to any sensing as long as the sensing system is applicable. Note that, in a case where sensing systems 10A to 10D and the like described below are not particularly distinguished, they are collectively referred to as a sensing system 10.

<1-19-1. First Application Example (Two-Photon Excitation/Second Harmonic Microscope)>

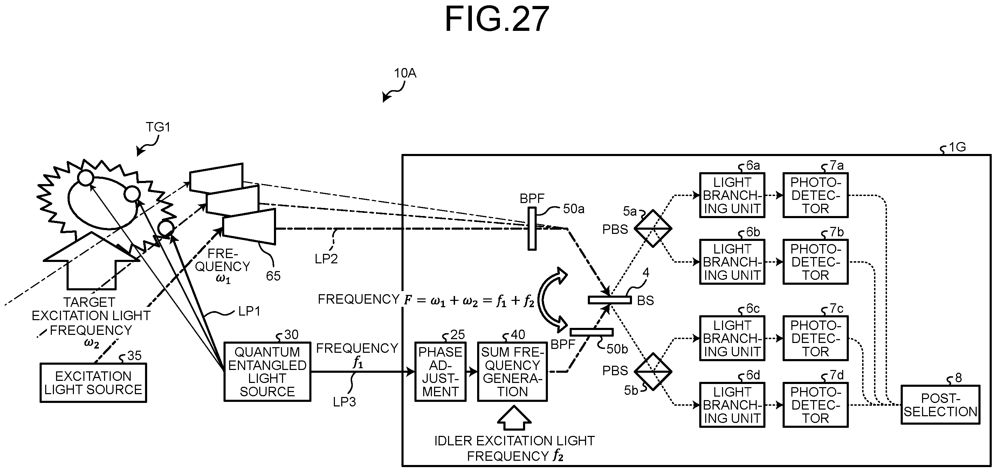

First, a case where the quantum sensing by the sensing system 10 is applied to two-photon excitation, a second harmonic microscope, or the like will be described as a first application example. FIG. 27 is a diagram illustrating the first application example of the quantum sensing.

The sensing system 10A illustrated in FIG. 27 includes a quantum entanglement generator 1G, the quantum entangled light source 30, an excitation light source 35, and a lens unit 65.

The excitation light source 35 outputs excitation light to an observation target TG1. In FIG. 27, the excitation light source 35 irradiates the observation target TG1 with target excitation light having a frequency $\omega2$. The lens unit 65 scans the observation target TG1 which is a target. For example, the observation target TG1 is an up-conversion probe, a tissue having a structure serving as a harmonic source, or the like.

In the quantum entanglement generator 1G, in the quantum entanglement generator 1F illustrated in FIG. 25, a band pass filter 50a is arranged in the second light guide path LP2, and in addition to the sum frequency generator 40, a phase adjuster 25 and a band pass filter 50b are arranged in the third light guide path LP3. Note that, in a case where the band pass filters 50a and 50b and the like described below are not particularly distinguished, they are collectively referred to as a band pass filter 50.

The band pass filter 50 is arranged in at least one of the second light guide path LP2 or the third light guide path LP3, functions as a band pass filter (BPF), and executes processing related to frequency. The phase adjuster 25 is arranged in at least one of the second light guide path or the third light guide path. The phase adjuster 25 executes processing related to phase adjustment. Further, in FIG. 27, idler excitation light having a frequency f2 is input to the sum frequency generator 40.

For example, in sensing using a quantum entangled photon pair, the sensing system 10A provides a method for measuring a specific fluorescent substance with high sensitivity. In a case where the fluorescence emitted from the target has a change in at least one of a wavelength, a phase, a time to fluorescence emission, or a polarization with respect to the projected quantum entangled light, the sensing system 10A performs an operation corresponding to the above change on the other of the photon pair and detects both photons by two-photon quantum interference, thereby implementing highly sensitive sensing.

Hereinafter, the first application example will be described more specifically with the configuration of FIG. 27 as an example. As described above, an example in which the sensing system 10A is applied to a two-photon excitation or second harmonic microscope will be described.

The sensing system 10A irradiates the observation target TG1 such as a tissue or a cell including a target (imaging target) with photons having a frequency $\omega1$ from the quantum entangled light source 30. At the same time, the observation target TG1 is irradiated with target excitation light having a frequency ω2 from another light source.

When the quantum entangled light and the target excitation light simultaneously interact with each other, the observation target TG1 transitions to a higher energy level by the total of two photons, and then, when the observation target TG1 returns to a ground state, the observation target TG1 emits fluorescence having a frequency F = ω1 + ω2. For example, when returning from a two-photon excitation level transitioned by the quantum entangled light and the target excitation light to a target ground level, the observation target TG1 emits two-photon excitation fluorescence of the above frequency F. The sensing system 10A measures this fluorescence.

First, the sensing system 10A transmits only the light having the frequency F by passing the light received from the observation target TG1 through the band pass filter 50 (BPF). The BPF transmitted light is introduced into the beam splitter 4 (BS). At the same time as the fluorescence from the observation target TG1, another light (idler light) from the quantum entangled light source 30 is introduced into the beam splitter 4 (BS). The sensing system 10A may optionally perform phase adjustment for performing simultaneous measurement with fluorescence by the phase adjuster 25. In addition, the sensing system 10A may perform the sum frequency generation by the sum frequency generator 40 using the idler excitation light in order to match the frequency of the idler light with the frequency F of the fluorescence. Note that the phase adjustment and the sum frequency generation may be optionally exchanged.

In the sensing system 10A, two beams of light simultaneously introduced into the BS generate two-photon interference, are then branched by the polarization characteristic in the polarizing beam splitter 5 (PBS), and are further diffused into a sensitive region of the photodetector 7 by the light branching unit 6 and measured. In the sensing system 10A, simultaneous measurement of the measured signals is determined by the post-selection 8, and only valid measurement events are selected.

The sensing system 10A as described above may be applied to a two-photon excitation microscope for microstructural analysis of biological tissues (such as the brain). In addition, the sensing system 10A may be applied to a second harmonic microscope for pathological tissue diagnosis and early diagnosis by cancer fibrosis detection.

The sensing system 10A allows for long term target observation with reduced toxicity and allows for reduced toxicity with reduced phototoxicity and reduced probe dosage. Further, the sensing system 10A can acquire information in a depth direction (about 10 mm) of a thick sample as compared with the existing sample (up to about 2 mm) .

<1-19-2. Second Application Example (Near Infrared Fluorescence Imaging)>

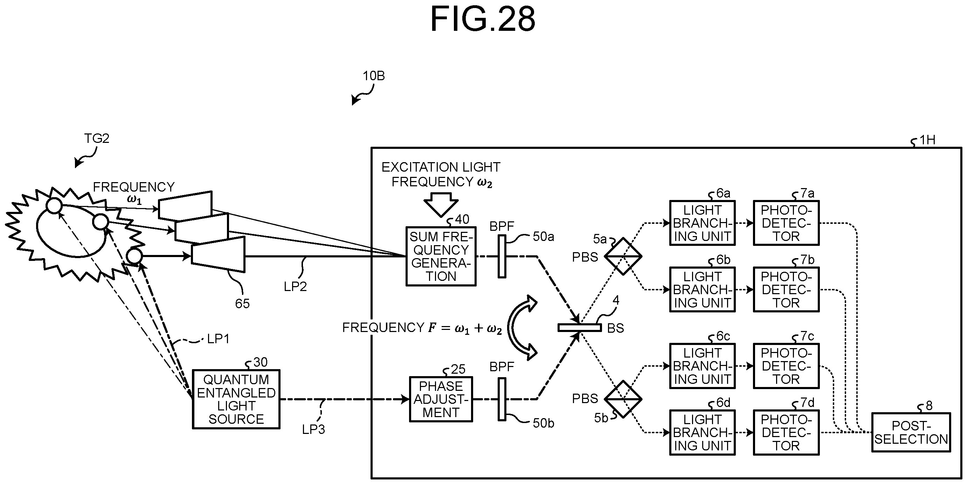

Next, a case where the quantum sensing by the sensing system 10 is applied to near infrared fluorescence imaging or the like will be described as a second application example. FIG. 28 is a diagram illustrating the second application example of the quantum sensing. Note that description of points similar to those described above will be omitted as appropriate.

The sensing system 10B illustrated in FIG. 28 includes a quantum entanglement generator 1H, the quantum entangled light source 30, and the lens unit 65. The lens unit 65 scans an observation target TG2 which is a target. For example, the observation target TG2 is a near-infrared fluorescent material or the like.

The quantum entanglement generator 1H has a configuration in which the arrangement of the sum frequency generator 40 is changed from the third light guide path LP3 to the second light guide path LP2 in the quantum entanglement generator 1G illustrated in FIG. 27. In addition, in FIG. 28, excitation light having a frequency ω2 is input to the sum frequency generator 40.

For example, the sensing system 10B is a system that performs measurement while scanning (alternatively, move target) a target (for example, a cell, a tissue, or the like) and performs imaging on the basis of a measurement result.

Hereinafter, the second application example will be described more specifically with the configuration of FIG. 28 as an example. As described above, an example in which the sensing system 10B is applied to near infrared fluorescence imaging will be described.

The sensing system 10B irradiates the observation target TG2 such as a tissue or a cell including a target (imaging target) with photons from the quantum entangled light source 30. When the observation target TG2 is excited by the quantum entangled light and returns to the ground state, the observation target TG2 emits fluorescence having a frequency ω1. For example, the observation target TG2 emits the near-infrared fluorescence having the above frequency ω1 when returning from the excitation level transitioned by the quantum entangled light to the target ground level. The sensing system 10B measures this fluorescence.

When fluorescence cannot be detected by the photodetector, the sensing system 10B may perform frequency conversion by sum frequency generation in the sum frequency generator 40. When the frequency conversion is performed, the sensing system 10B transmits only the light having the converted frequency F by passing the photons after conversion through the band pass filter 50 (BPF). The light transmitted through the BPF is introduced into the beam splitter 4 (BS). At the same time as the light derived from the observation target TG2, another light (idler light) from the quantum entangled light source 30 is introduced into the BS. The phase adjustment for performing the simultaneous measurement with the fluorescence may be optionally performed by the phase adjuster 25.

In the sensing system 10B, two beams of light simultaneously introduced into the BS generate two-photon interference, are then branched by the polarization characteristic in the polarizing beam splitter 5 (PBS), and are further diffused into the sensitive region of the photodetector 7 by the light branching unit 6 and measured. In the sensing system 10B, simultaneous measurement of the measured signals is determined by the post-selection 8, and only valid measurement events are selected.

The sensing system 10B as described above may be applied to deep imaging (about 40 mm) of a living body and observation of a minute site such as a capillary, a lymphatic vessel, or a cancer tumor site. In addition, the sensing system 10B may be applied to high-sensitivity fluorescent label detection for polymerase chain reaction (PCR), cell surface, identification of a specifically expressed protein, a cancer biomarker, an immunohistological staining marker for pathology inspection, and extracorporeal diagnostic fluorescent microparticles.

For example, many near-infrared probes have cytotoxicity, such as carbon nanotubes, ceramic nanoparticles, and rare earth ions, but the sensing system 10B can reduce the biological load by reducing the toxicity. In addition, the sensing system 10B can acquire information in the depth direction (about 40 mm) of a thick sample as compared with the existing sample (up to about 20 mm).

<1-19-3. Third Application Example (Near-Infrared Light Brain Measurement Device)>

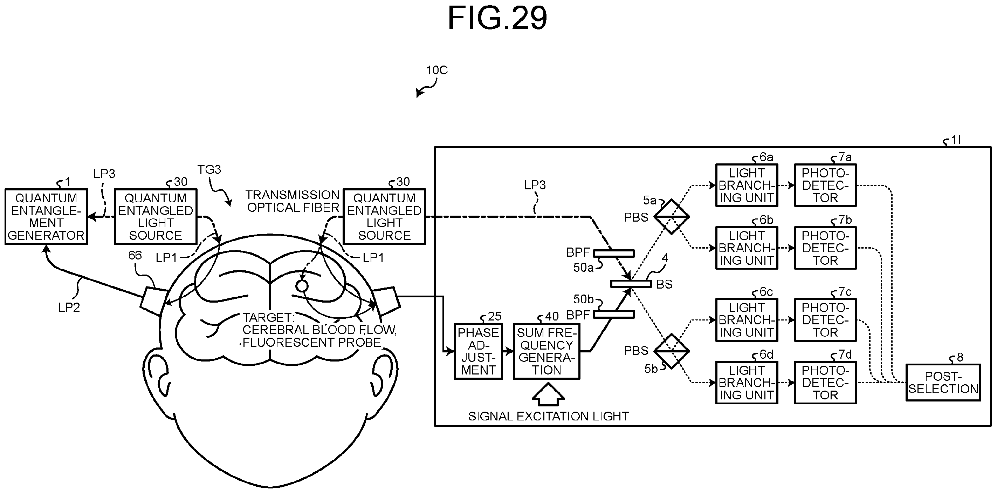

Next, a case where the quantum sensing by the sensing system 10 is applied to near infrared fluorescence imaging or the like will be described as a third application example. FIG. 29 is a diagram illustrating the third application example of the quantum sensing. Note that description of points similar to those described above will be omitted as appropriate.

The sensing system 10C illustrated in FIG. 29 includes a quantum entanglement generator 1I, the quantum entangled light source 30, and a light receiving probe 66. The light receiving probe 66 is a probe for receiving light from an observation target TG3 which is a target. For example, the observation target TG3 is a cerebral blood flow, a fluorescent probe, or the like.

The quantum entanglement generator 1I has a configuration in which the arrangement of the phase adjuster 25 and the sum frequency generator 40 is changed from the third light guide path LP3 to the third light guide path LP2 in the quantum entanglement generator 1G illustrated in FIG. 27. In addition, in FIG. 29, signal excitation light is input to the sum frequency generator 40.

For example, the sensing system 10C is a system that performs in vivo imaging of a specific site of a living body such as an organ or an apparatus, or a small animal.

Hereinafter, the third application example will be described more specifically with the configuration of FIG. 29 as an example. As described above, an example in which the sensing system 10C is applied to a near-infrared light brain measurement device (Near-infrared spectroscopy (NIRS)) will be described.

The sensing system 10C irradiates the head with photons from the quantum entangled light source 30 through an optical fiber (transmission optical fiber). An assumed target (observation target TG3) includes the following, and light received by the sensing system 10C differs depending on a difference in the observation target TG3.

For example, in a case where the cerebral blood flow is set as the observation target TG3, the light received by the sensing system 10C is reflected light from the cerebral blood flow. Furthermore, for example, in a case where the fluorescent probe is set as the observation target TG3, the light received by the sensing system 10C is fluorescent light from the probe.

The light emitted from the observation target TG3 is introduced into the quantum entanglement generator 1I of the sensing system 10C through the light receiving probe 66. The sensing system 10C introduces the received light into the beam splitter 4 (BS) for simultaneous measurement with the idler light from the quantum entangled light source 30. Before introduction into the BS, phase adjustment may be optionally performed by the phase adjuster 25. In addition, the sensing system 10C may perform frequency conversion by sum frequency generation in order to match the frequencies of the received light and the idler light. When the frequency conversion is performed, the sensing system 10C passes the light after conversion through the band pass filter 50 (BPF) in order to select the light of which the sum frequency is successful.

In the sensing system 10C, the other light emitted from the quantum entangled light source 30 is introduced into the BS in order to interfere with the light emitted from the observation target TG3. In the sensing system 10C, two beams of light simultaneously introduced into the BS generate two-photon interference, are then branched by the polarization characteristic in the polarizing beam splitter 5 (PBS), and are further diffused into the sensitive region of the photodetector 7 by the light branching unit 6 and measured. In the sensing system 10C, simultaneous measurement of the measured signals is determined by the post-selection 8, and only valid measurement events are selected.

The sensing system 10C as described above may be applied to rehabilitation effect determination and pain evaluation by evaluation of the brain activity amount/brain activation site. Further, the sensing system 10C may be applied to medical diagnosis of dementia, brain tumor, and the like. Furthermore, the sensing system 10C may be applied to a brain-machine interface (Brain-machine I/F).

For example, although the conventional target is only cerebral blood flow, the sensing system 10C enables medical diagnosis by using a near-infrared fluorescent probe. The sensing system 10C can acquire information in a deeper depth direction (about 40 mm) than existing systems (up to about 20 mm). Thus, the sensing system 10C can measure a site (white matter, cerebellum, or the like) different from the conventional site.

<1-19-4. Fourth Application Example (Flow Cytometer) >

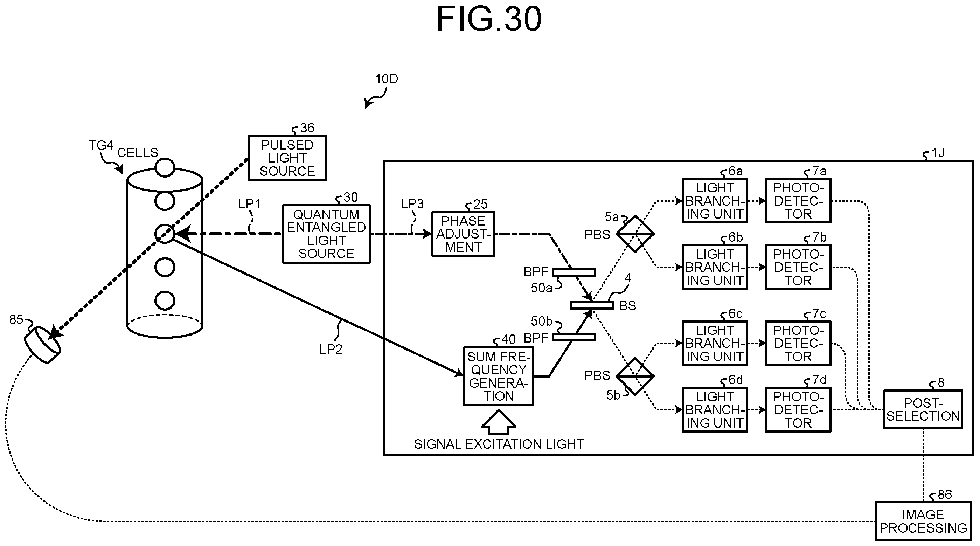

Next, a case where the quantum sensing by the sensing system 10 is applied to a flow cytometer (FCM) or the like will be described as a fourth application example. FIG. 30 is a diagram illustrating the fourth application example of the quantum sensing. Note that description of points similar to those described above will be omitted as appropriate.

The sensing system 10D illustrated in FIG. 30 includes a quantum entanglement generator 1J, the quantum entangled light source 30, a pulsed light source 36, an image sensor 85, and an image processing unit 86. The pulsed light source 36 irradiates an observation target TG4 as a target with light. For example, the observation target TG4 is a cell flowing in a fluid in an analysis sample or the like in the in vitro diagnosis.

The quantum entanglement generator 1J has a configuration in which the arrangement of the sum frequency generator 40 is changed from the third light guide path LP3 to the fourth light guide path LP2 in the quantum entanglement generator 1G illustrated in FIG. 27. Further, in FIG. 30, signal excitation light is input to the sum frequency generator 40.

For example, the sensing system 10D is a system for detecting a trace target in a sample that is difficult to detect by an existing analysis method.

Hereinafter, the fourth application example will be described more specifically with the configuration of FIG. 30 as an example. As described above, an example in which the sensing system 10D is applied to a flow cytometer will be described. The sensing system 10D irradiates liquid in which cells are suspended with light (signal light) from the quantum entangled light source 30, and generates fluorescence from the cells. The fluorescence is introduced into the beam splitter 4 (BS) included in the quantum entanglement generator 1J.

Frequency conversion by sum frequency generation on the fluorescence may be optionally performed by the sum frequency generator 40 in order to cause the fluorescence to interfere with the other of the entangled light (idler light). When the frequency conversion is performed, the sensing system 10D passes the light after conversion through the band pass filter 50 (BPF) in order to select the light of which the sum frequency is successful.

In the sensing system 10D, idler light is also introduced into the BS included in the quantum entanglement generator 1J. For idler light, phase adjustment may be optionally performed by the phase adjuster 25 for interference with fluorescence.

In the sensing system 10D, two beams of light simultaneously introduced into the BS generate two-photon interference, are then branched by the polarization characteristic in the polarizing beam splitter 5 (PBS), and are further diffused into the sensitive region of the photodetector 7 by the light branching unit 6 and measured. In the sensing system 10D, simultaneous measurement of the measured signals is determined by the post-selection 8, and only valid measurement events are selected.

The sensing system 10D irradiates the cell with light from the pulsed light source 36 during a period in which the quantum entanglement signal light is exposed, and acquires a morphological image of the cell by the image sensor 85. A time stamp at the time of image acquisition is given to this image, and the sensing system 10D selects an image closest to the time of the quantum light measurement event selected in the post-selection 8 of the two-photon interference. In the sensing system 10D, the image processing unit 86 performs image processing of overlapping the quantum light measurement event selected so far and a cell morphology image, and visualizes the fluorescent light source localized in the cell.

The sensing system 10D as described above may be applied to disease diagnosis, result analysis of gene introduction, cell line fractionation, and the like.

The sensing system 10D can directly measure fluorescence emitted from an intracellular organ, thereby enabling non-fluorescence/non-staining measurement, fluorescence measurement of a near infrared (NIR) region, and the like.

In the quantum sensing as described above, the sensing system 10 can implement high-sensitivity sensing by selectively measuring a signal, and can efficiently generate a quantum entanglement state.

<1-20. Configuration Example of Light Branching Unit and Photodetector>

Hereinafter, a configuration example of the light branching unit 6 and the photodetector 7 will be described. Note that the configuration described below is merely an example, and any configuration can be employed for the light branching unit 6 and the photodetector 7 as long as desired detection is possible. In addition, the light branching unit 6 and the photodetector 7 having the configurations described below may be included in either the detection system 1 or the sensing system 10, and a case where the detection system 1 includes them will be described below as an example. Since the detection system 1 has a configuration such as the following first configuration example (plurality of elements) or second configuration example (array element), it is possible to improve the sensitivity of simultaneous measurement, reduce the influence of the Deadtime of the elements, improve the measurement rate, and the like.

<1-20-1. First Configuration Example (Plurality of Elements)>

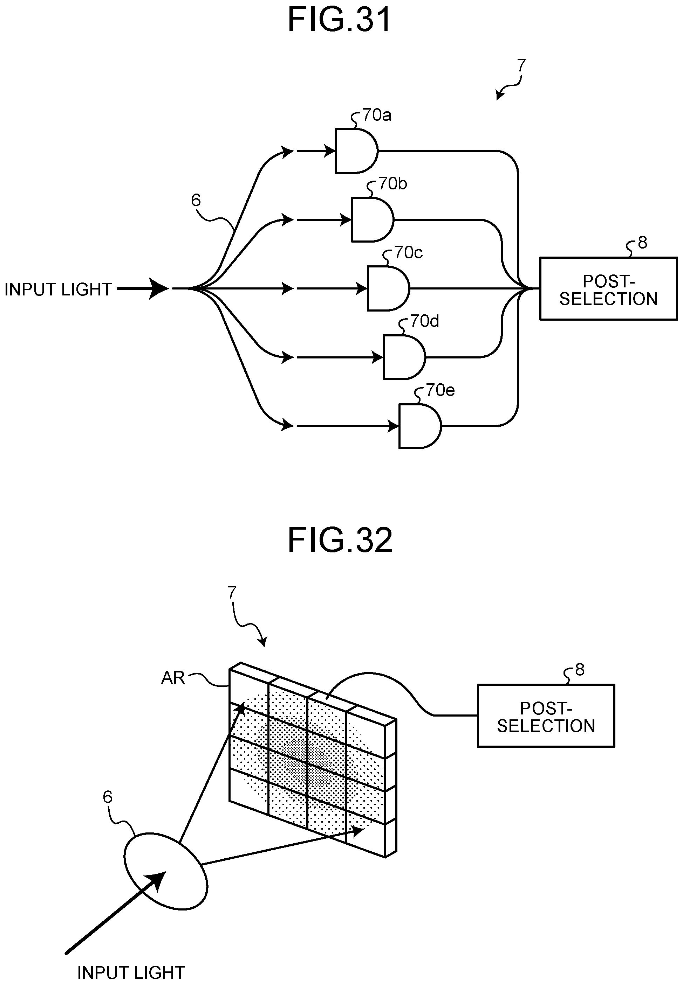

First, a first configuration example of the light branching unit 6 and the photodetector 7 will be described with reference to FIG. 31. FIG. 31 is a diagram illustrating a first configuration example of the light branching unit and the photodetector. FIG. 31 corresponds to the portion of the configuration PT1 of the portion in FIG. 16. FIG. 31 illustrates an outline of configurations of portions of the light branching unit 6d, the photodetectors 7d of the four photodetectors 7, and the post-selection 8 among the four light branching units 6 in FIG. 16.

In FIG. 31, the photodetector 7 includes five detection units 70a, 70b, 70c, 70d, and 70e. Note that, in a case where the detection units 70a, 70b, 70c, 70d, 70e, and the like described below are not particularly distinguished, they are collectively referred to as a detection unit 70. As illustrated in FIG. 31, in the first configuration example, the photodetector 7 includes a plurality of detection units 70 that detect the light branched by the light branching unit 6. For example, each detection unit 70 is one light receiving element (light receiver) that detects the light branched by the light branching unit 6.

Further, the light branching unit 6 is an optical divider that branches and introduces light into each of the plurality of detection units 70. In FIG. 31, the light branching unit 6 branches light to each of the five detection units 70. For example, the light branching unit 6 has a plurality of optical paths (for example, optical fibers and the like) that branch light to the detection unit 70 that branches light to each of the five detection units 70. For example, the light branching unit 6 includes a first optical path for branching light to the detection unit 70a, a second optical path for branching light to the detection unit 70b, a third optical path for branching light to the detection unit 70c, a fourth optical path for branching light to the detection unit 70d, and a fifth optical path for branching light to the detection unit 70d.

As described above, in the first configuration example, the light branching unit 6 that is an optical divider branches and introduces light into the plurality of detection units 70 (elements). In a case where the first configuration example is employed, for example, in the detection system 1, the photodetector 7 including the plurality of detection units 70 (light receiving elements) is used. Input light to the photodetector 7 is branched into a plurality of optical paths by the light branching unit 6, and the detection unit 70 (light receiving element) is provided for light detection independent of each optical path.

In the first configuration example, there is a device that issues a timing clock to the outside of a detector (for example, the detection unit 70), and time synchronization is performed between the detectors. As a means for synchronizing time between the detectors, a means other than those described above may be applied. In addition, in the first configuration example, a function that requires advance preparation such as training and calibration before measurement may be introduced.

Note that, in the first configuration example, a detector capable of detecting a single photon or the number of photons may be used. In addition, in the first configuration example, there may be a difference in characteristics (such as material, composition, and shape) among the plurality of detectors. Further, in the first configuration example, a function (such as cooling or variable bias) for improving and changing characteristics of the detector may be provided.

<1-20-2. Second Configuration Example (Array Element) >

Next, a second configuration example of the light branching unit 6 and the photodetector 7 will be described with reference to FIG. 32. FIG. 32 is a diagram illustrating a second configuration example of the light branching unit and the photodetector. FIG. 32 corresponds to the portion of the configuration PT1 of the portion in FIG. 16. FIG. 32 illustrates an outline of configurations of portions of the light branching unit 6d among the four light branching units 6, the photodetectors 7d of the four photodetectors 7, and the post-selection 8 in FIG. 16.

As illustrated in FIG. 32, in the second configuration example, the photodetector 7 is an array element. The photodetector 7 includes a plurality of regions AR (for example, light receiving elements) on a light receiving surface of the array element as a plurality of detection units. In FIG. 32, the photodetector 7 has 16 regions AR.

Further, the light branching unit 6 is a lens that branches and introduces light into each of the plurality of regions of the array element. In FIG. 32, the light branching unit 6 branches light into each of the plurality of regions AR of the photodetector 7.

As described above, in the second configuration example, the light branching unit 6 that is a lens disperses and introduces light into the photodetector 7 that is an array element. In a case where the second configuration example is employed, for example, in the detection system 1, a single array type detector is used as the photodetector 7. The input light is diffused on the light receiving surface of the photodetector 7 which is an array type detector by diffusion at a lens or by the light branching unit 6 which is an optical divider.

In the second configuration example, in the array type detector (for example, the photodetector 7), the elements are synchronized with each other inside. Further, in the second configuration example, synchronization between elements (for example, light receiving elements) may be performed using a timing clock issued from the outside. In the second configuration example, a photodetector or a detector element capable of detecting a single photon or the number of photons may be used, but it is preferable that the photodetector or the detector element can detect the number of photons. In the second configuration example, a function (such as cooling or variable bias) for improving and changing characteristics of the detector may be provided.

<1-20-3. Another Configuration Example (Single Array Type Detector)>

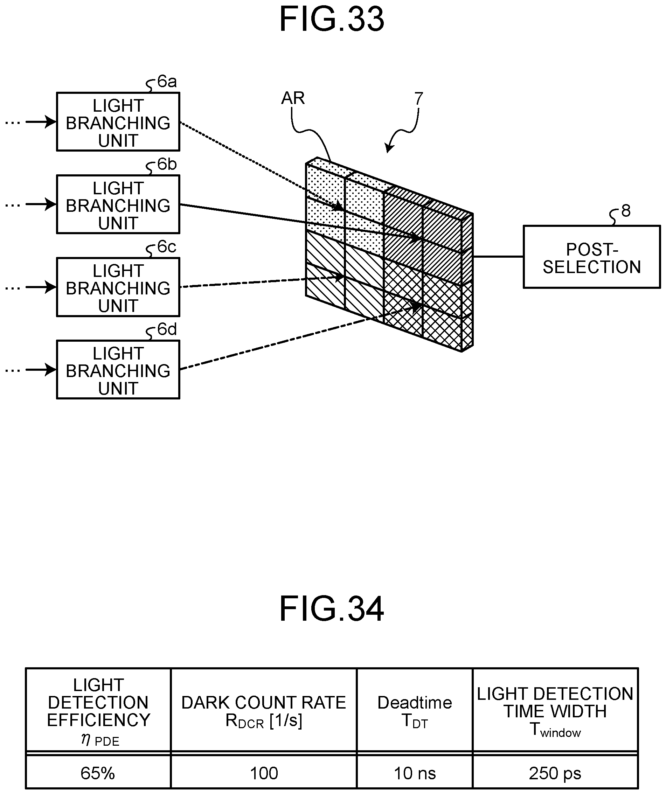

Without being limited to the first configuration example and the second configuration example described above, any configuration can be employed as the light branching unit 6 and the photodetector 7. This configuration example (also referred to as a "third configuration example") will be described with reference to FIG. 33. FIG. 33 is a diagram illustrating another configuration example of the photodetector. FIG. 33 illustrates an example of a method for implementing the photodetector 7. Specifically, in FIG. 33, all the photodetectors may be configured using a single array type detector as the photodetector 7. In this case, the detection system 1 may be a system having one photodetector 7.

In FIG. 33, the photodetector 7 is an array element. The photodetector 7 includes a plurality of regions AR (for example, light receiving elements) on a light receiving surface of the array element as a plurality of detection units. In FIG. 33, the photodetector 7 has 16 regions AR. For example, the photodetector 7 is configured so that four regions AR on the upper left side detect light from the light branching unit 6a, four regions AR on the upper right side detect light from the light branching unit 6b, four regions AR on the lower left side detect light from the light branching unit 6c, and four regions AR on the lower right side detect light from the light branching unit 6d. As described above, the photodetector 7 may be used as an array type detector that allocates a plurality of light detection elements to each of the paths.

In the third configuration example illustrated in FIG. 33, the photodetector 7, which is a single array type detector, is used to perform all light detection necessary for the detection system 1 and the like.

For example, in the detection system 1 having the third configuration example, the input light from the entangled light source undergoes unitary conversion, wavelength conversion, and wavelength selection, and is introduced into the beam splitter 4 (BS) to generate interference. In the detection system 1 having the third configuration example, light that has undergone interference by the BS is introduced into the polarizing beam splitter 5 (PBS), branched into four paths, and further introduced into the light branching unit 6.

In the light branching unit 6 of the detection system 1 having the third configuration example, the input light is diffused with respect to the specific region AR of the photodetector 7 which is the array type detector and introduced into the light receiving surface of the photodetector 7. In the photodetector 7 which is an array type detector of the detection system 1 having the third configuration example, the elements are synchronized inside.

Note that, in the third configuration example, the elements may be synchronized using a timing clock issued from the outside. In the third configuration example, a photodetector or a detector element capable of detecting a single photon or the number of photons may be used, but the photodetector or the detector element capable of detecting the number of photons is preferable. In the third configuration example, a function (such as cooling or variable bias) for improving and changing characteristics of the detector may be provided.

<1-21-4. Photodetector Performance>

Hereinafter, photodetector performance according to the above-described configuration will be described. Hereinafter, the relationship between the number of elements of the photodetector and the maximum light detection rate will be described, and a theoretical estimation of the maximum light detection rate by using multiple elements as the photodetector will be described. First, FIG. 34 is a diagram illustrating an example of photodetector performance in a single element. FIG. 34 illustrates, as an example, light detection efficiency, a dark count rate, a Deadtime, the light detection time width, and the like as indices indicating the performance of the assumed photodetector single element.

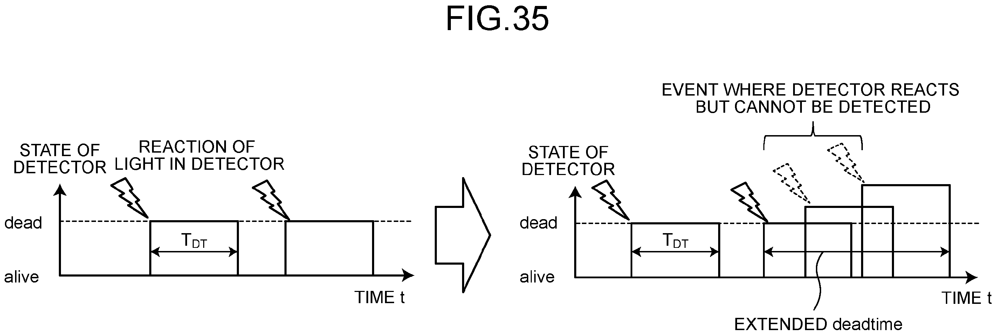

First, a premise and the like will be described before the relationship between the number of elements of the photodetector and the maximum light detection rate is described. First, the behavior of light detection will be described with reference to FIG. 35. FIG. 35 is a diagram illustrating an example of behavior of light detection. In two graphs in FIG. 35, the horizontal axis corresponds to time t, and the vertical axis corresponds to the state of the detector. A substantially triangular figure in each graph corresponds to a light reaction in the detector.

As illustrated in the graph on the left side in FIG. 35, once a detector (photomultiplier tube (PPMT), SPAD, superconducting single photon detector (SSPD), transition edge sensor (TES), or the like) having light detection sensitivity at a single photon level detects light, $T_{DT}$ that is a deadtime at which light detection cannot be performed for a while occurs. As illustrated in the graph on the right side in FIG. 35, when the rate of light arriving at the detector increases, the deadtime extends, and the time during which light detection cannot be performed increases. Accordingly, as illustrated in the graph on the right side in FIG. 35, an event that the detector reacts but cannot be detected may occur.

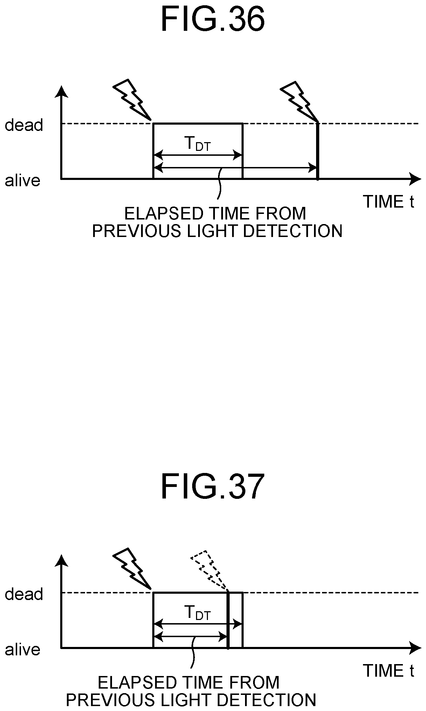

As illustrated in FIG. 36, light can be detected when a time exceeding $T_{DT}$ has elapsed from the previous light detection. FIG. 36 is a diagram illustrating an example of a case where light can be detected. On the other hand, as illustrated in FIG. 37, when the elapsed time from the previous light detection is within $T_{DT}$, light cannot be detected. FIG. 37 is a diagram illustrating an example of a case where light cannot be detected.

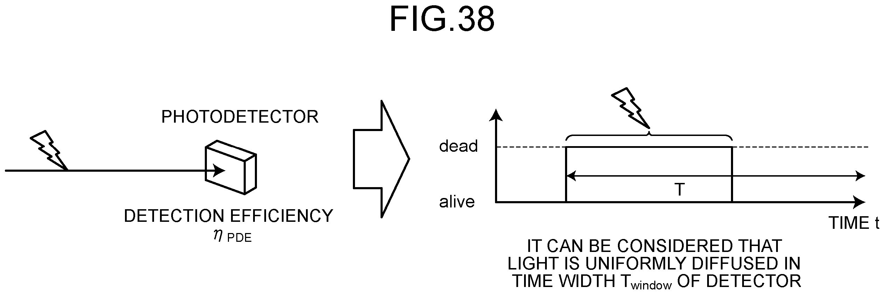

Hereinafter, a model of light detection of light detection will be described with reference to FIG. 38. FIG. 38 is a diagram illustrating an example of the model of light detection. The light detection time of the detector has a width $T_{window}$, and thus, even if one photon reacts with the detector at a specific time, it is not possible to specify where in the $T_{window}$ the reaction occurs. Accordingly, it is considered that the light is uniformly diffused in the $T_{window}$. An instantaneous rate $R_{impulse}$ of light at this time is assumed. When it is assumed that one photon is uniformly diffused in a $T_{window}$ of time, the rate $R_{impulse}$ of light in the $T_{window}$ is expressed by the following Expression (7).

$$R_{\mathrm{impulse}} = {}^{1}\!/_{T_{\mathrm{window}}} \qquad \cdots (7)$$

The detection probability of light is obtained as a probability that light detection occurs when the detector is exposed to $R_{impulse}$ for a time T as in the following Expression (8).

$$P(T) = 1 - exp\big[\big(\eta_{PDE}R_{impulse} + R_{DCR}\big)T\big] \qquad \cdots (8)$$

Here, $R_{DCR}$ is a dark count rate at which the photodetector reacts without input of light. Hereinafter, the light detection probability expressed by the following Expression (9) where time $T = T_{window}$ is used.

$$P_D = P(T_{window}) = 1 - exp\big[\big(\eta_{PDE}R_{impulse} + R_{DCR}\big)T_{window}\big] \qquad \cdots (9)$$

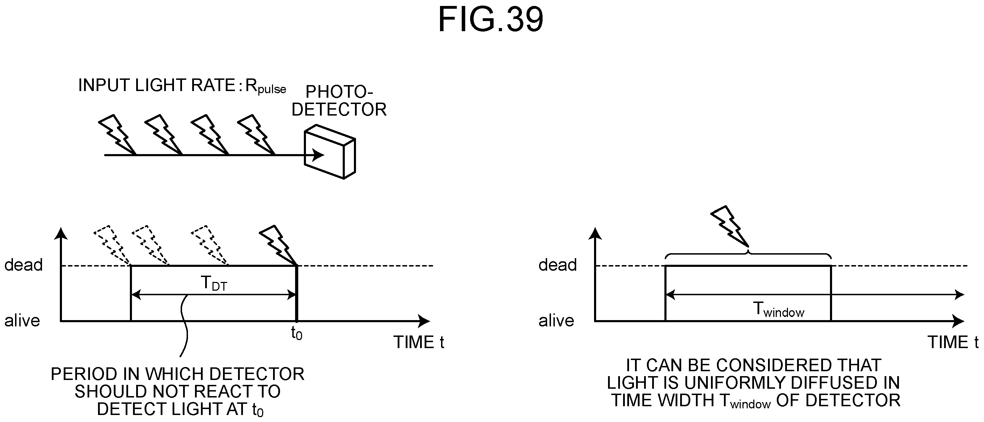

The probability that the detector is ready to detect light and the probability that the detector detects light will be described with reference to FIG. 39. FIG. 39 is a diagram illustrating an example of deriving the light detection rate. As illustrated in FIG. 39, under a situation where the input light rate $R_{pulse}$ is input to the photodetector, the probability that detection of light is possible (the detector does not react in the immediately preceding $T_{DT}$ period) is expressed by the following Expression (10). Further, the probability that the detector detects light is expressed by the following Expression (11).

$$P_{ND}\big(R_{pulse}, T_{DT}\big) = exp\big[-\big(\eta_{PDE}R_{pulse} + R_{DCR}\big)T_{DT}\big] \qquad \cdots (10)$$

$$P_D = 1 - exp\big[\big(\eta_{PDE}R_{impulse} + R_{DCR}\big)T_{window}\big] \qquad \cdots (11)$$

Based on the above, the probability of light detection is expressed by the following Expression (12).

$$P_{\mathrm{ND}}\big(R_{\mathrm{pulse}}, T_{\mathrm{DT}}\big)P_{\mathrm{D}} = exp\big[-\big(\eta_{\mathrm{PDE}}R_{\mathrm{pulse}} + R_{\mathrm{DCR}}\big)T_{\mathrm{DT}}\big]$$
$$\big\{1 - exp\big[\big(\eta_{\mathrm{PDE}}R_{\mathrm{impulse}} + R_{\mathrm{DCR}}\big)T_{\mathrm{window}}\big]\big\} \qquad \cdots (12)$$

The rate of light detection only needs to be obtained by multiplying the above by a light incident rate. Therefore, it is obtained as the following Expression (13).

$$R_{detect} = R_{pulse}\,exp\big[-\big(\eta_{PDE}R_{pulse} + R_{DCR}\big)T_{DT}\big]$$
$$\big\{1 - exp\big[\big(\eta_{PDE}R_{impulse} + R_{DCR}\big)T_{window}\big]\big\} \qquad \cdots (13)$$

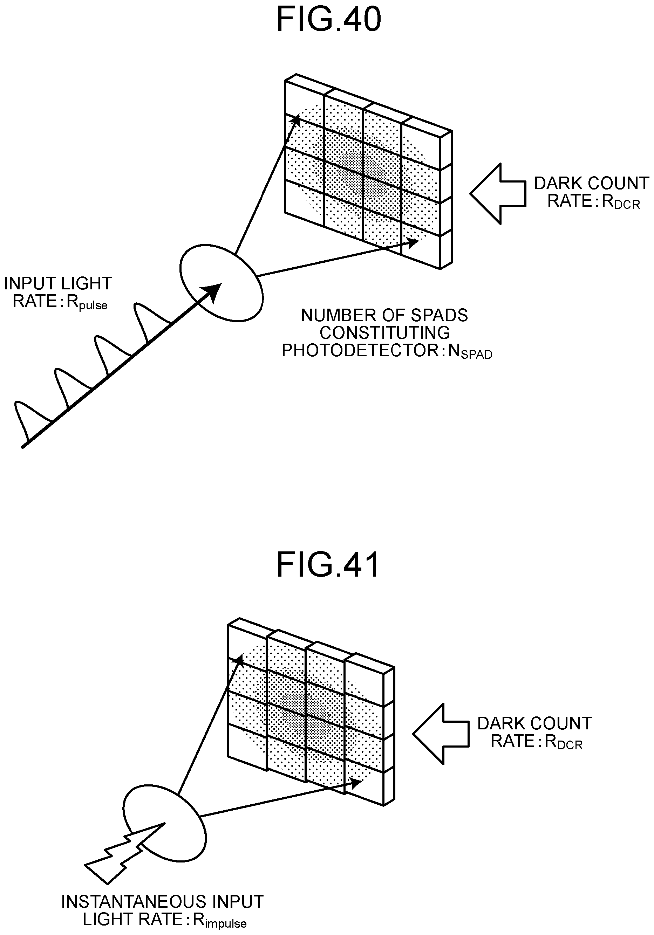

From here, the probability that light detection occurs in the SPAD of multiple elements will be described. As illustrated in FIGS. 40 and 31, light input to the SPAD is diffused by the number of SPADs constituting the photodetector. FIG. 40 is a diagram illustrating an example of a model of light detection in a case where the photodetector includes multiple elements. FIG. 41 is a diagram illustrating an example of a model of light detection in a case where the photodetector includes multiple elements.

The probability that detection of light dispersed in each SPAD occurs is expressed by the following Expression (14).

$$P(N_{\text{SPAD}}, R_{\text{pulse}}) = R_{\text{pulse}} \exp\left[-\left(\frac{\eta_{\text{PDE}} R_{\text{pulse}}}{N_{\text{SPAD}}} + R_{\text{DCR}}\right) T_{\text{DT}}\right]$$

$$\left\{1 - \exp\left[-\left(\frac{\eta_{\text{PDE}} R_{\text{impulse}}}{N_{\text{SPAD}}} + R_{\text{DCR}}\right) T_{\text{window}}\right]\right\} \qquad \cdots (14)$$

The probability that detection of light dispersed by any SPAD occurs once is expressed by the following Expression (15).

$$P_{\text{meas}}(N_{\text{SPAD}}, R_{\text{pulse}}) = N_{\text{SPAD}} P(N_{\text{SPAD}}, R_{\text{pulse}})$$

$$\left[1 - P(N_{\text{SPAD}}, R_{\text{pulse}})\right]^{N_{\text{SPAD}}-1} \qquad \cdots (15)$$

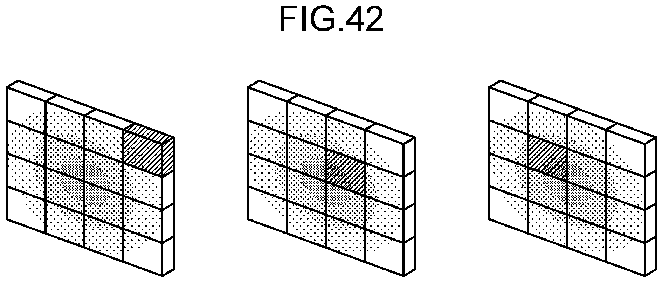

Multiple detection events may occur due to quantum fluctuations in light and measurement uncertainty. Since detection of one photon is expected, multiple detection events are rejected. In this case, for example, as illustrated in FIG. 42, as detection of one photon, a plurality of detection events is rejected. FIG. 42 is a diagram illustrating an example of dispersed light and detection by multiple elements.

Based on the above, the maximum light detection rate with respect to the number of elements is calculated. For example, the maximum light detection rate is calculated in the following two steps (Step#1 and Step#2).

In Step#1, the term ($R^{\text{max}}_{\text{pulse}}$) on the left side of Expression (16) that maximizes the light detection rate is calculated by the Newton method or the like using the following Expression (16).

$$R^{\text{max}}_{\text{pulse}} = \underset{R_{\text{pulse}}}{\text{argmax}}\, R_{\text{pulse}} P_{\text{meas}}(N_{\text{SPAD}}, R_{\text{pulse}}) \qquad \cdots (16)$$

In Step#2, an expected value of the light detection rate in a case where the term ($R^{\text{max}}_{\text{pulse}}$) on the left side of Expression (16) is input to the photodetector is obtained as the maximum light detection rate $R_{\text{max}}$ as in the following Expression (17).

$$R_{\text{max}} = R^{\text{max}}_{\text{pulse}} P_{\text{meas}}(N_{\text{SPAD}}, R^{\text{max}}_{\text{pulse}}) \qquad \cdots (17)$$

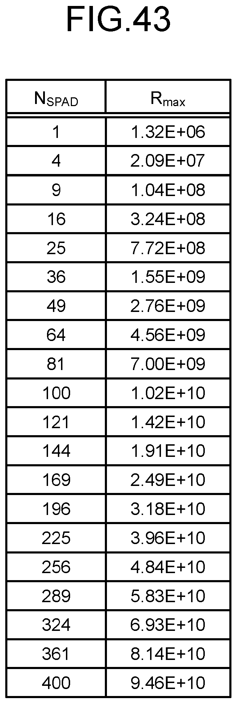

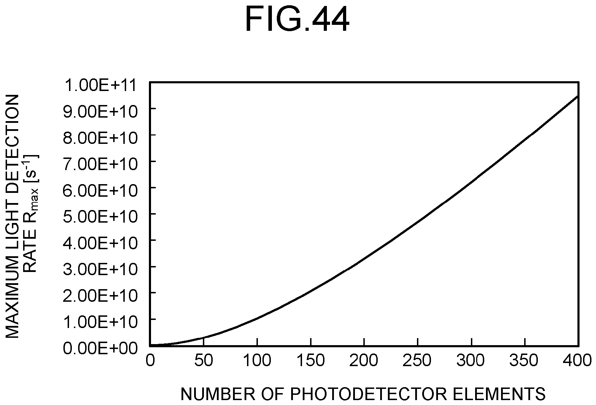

By the calculation of the maximum light detection rate described above, the maximum light detection rate due to the difference in the number of photodetector elements as illustrated in FIGS. 43 and 44 is derived. FIGS. 43 and 44 are diagrams illustrating an example of calculation of the maximum light detection rate with respect to the number of elements. FIG. 43 is a diagram illustrating an example of calculation of the maximum light detection rate with respect to the number of elements in the form of a table. FIG. 44 is a diagram illustrating an example of calculation of the maximum light detection rate with respect to the number of elements in the form of a graph.

Like the maximum light detection rate due to the difference in the number of elements illustrated in FIGS. 43 and 44, the maximum detection rate increases substantially in proportion to the number of elements. As described above, regarding the photodetector performance, the rate is derived by the calculation as described above, and based on this index, it can be seen that the performance is improved by increasing the number of detectors.

<2. Modification Example>

The control device that controls the detection system 1, the sensing system 10, and the like (measurement device) of the present embodiment may be implemented by a dedicated computer system or a general-purpose computer system.

For example, a program for executing the above-described operation is stored and distributed in a computer-readable recording medium such as an optical disk, a semiconductor memory, a magnetic tape, or a flexible disk. Then, for example, by installing the program in a computer and executing the above-described processing, the control device can be configured. At this time, the control device may be a device (for example, a personal computer) outside the detection system 1, the sensing system 10, and the like (measurement device). In addition, the control device may be a device (for example, a processor) inside the detection system 1, the sensing system 10, and the like (measurement device).

In addition, the above program may be stored in a disk device included in a server on a network such as the Internet so that the communication program can be downloaded to a computer. Furthermore, the above-described functions may be implemented by cooperation of an operating system (OS) and application software. In this case, a portion other than the OS may be stored in a medium and distributed, or a portion other than the OS may be stored in a server, and downloading to a computer, or the like can be performed.

In addition, among the processes described in the above embodiments, all or part of the processes described as being performed automatically can be performed manually, or all or part of the processes described as being performed manually can be performed automatically by a publicly known method. Further, the processing procedure, specific name, and information including various data and parameters illustrated in the above document and the drawings can be optionally changed unless otherwise specified. For example, the various types of information depicted in each figure are not limited to the depicted information.

Further, each component of each device depicted in the drawings is functionally conceptual, and is not necessarily physically configured as depicted in the drawings. That is, a specific form of distribution and integration of each device is not limited to the illustrated form, and all or a part thereof can be functionally or physically distributed and integrated in any unit according to various loads, usage conditions, and the like. Note that this configuration by distribution and integration may be performed dynamically.

Further, the above-described embodiments can be appropriately combined in a region in which the processing contents do not contradict each other. Furthermore, the order of each step illustrated in the flowchart of the above-described embodiment can be appropriately changed.

Furthermore, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected via a network and one device in which a plurality of modules is housed in one housing are both systems.

In addition, for example, the present embodiment can employ a configuration of cloud computing in which one function is shared and processed by a plurality of devices in cooperation via a network.

<3. Conclusion>

As described above, according to an embodiment of the present disclosure, the detection system is a system that receives quantum entangled light from one or more paths. A detection system includes one or more beam splitters that cause interference of the quantum entangled light, light receiving elements provided corresponding to respective paths branched by a plurality of splitters including at least the beam splitter, and a measurement instrument that detects respective detection timings of photons in the plurality of light receiving elements.

In addition, according to the embodiment of the present disclosure, the detection system is a system that receives quantum entangled light from a plurality of paths. A detection system includes a plurality of beam splitters that cause interference of the quantum entangled light, light receiving elements provided corresponding to respective paths branched by the beam splitter, and a measurement instrument that detects respective detection timings of photons in the plurality of light receiving elements.

In addition, according to the embodiment of the present disclosure, the detection system is a system that receives quantum entangled light. A detection system includes a beam splitter that causes interference of the quantum entangled light, a plurality of polarizing beam splitters that branches, in a polarization state, the quantum entangled light after the interference by the beam splitter, light receiving elements provided corresponding to respective paths branched by the polarizing beam splitter, and a measurement instrument that detects respective detection timings of photons in the plurality of light receiving elements.

In addition, according to the embodiment of the present disclosure, the sensing system is a system that receives quantum entangled light from one or more paths. A detection system includes one or more beam splitters that cause interference of the quantum entangled light, light receiving elements provided corresponding to respective paths branched by a plurality of splitters including at least the beam splitter, a branching unit that branches light to be introduced into the plurality of light receiving elements, and a measurement instrument that detects respective detection timings of photons in the plurality of light receiving elements.

Further, according to the embodiment of the present disclosure, a sensing system includes a quantum entangled light source that outputs at least two photons in a quantum entanglement state, and a quantum entanglement generator that detects a detection timing of a photon by a light receiving element provided corresponding to a path branched by at least one beam splitter that causes interference of the quantum entangled light. Among a first light guide path that applies one of the two photons to an observation target, a second light guide path that guides a photon returning from the observation target to the beam splitter, and a third light guide path that guides the other of the two photons to the beam splitter, the quantum entanglement generator receives light from the second light guide path and the third light guide path.

Thus, the number of times of quantum entanglement trials per unit time can be increased, so that the efficiency of quantum entanglement formation per unit time can be improved.

Although the embodiments of the present disclosure have been described above, the technical scope of the present disclosure is not limited to the above-described embodiments as it is, and various modifications can be made without departing from the gist of the present disclosure. In addition, components of different embodiments and modification examples may be appropriately combined.

In addition, the effects in the embodiments described in the present description are merely examples and are not limited, and other effects may be provided.

<4. Effects According to Present Disclosure>

As described above, the measurement device (in the embodiment, the detection system 1 or the like) according to the present disclosure is a measurement device that receives quantum entangled light from one or more paths, and includes one or more beam splitters (in the embodiment, the beam splitter 4 or the like. The same applies hereinafter) that cause interference of the quantum entangled light, light receiving elements (in the embodiment, the photodetector 7 and the like. The same applies hereinafter) provided corresponding to respective paths branched by a plurality of splitters (in the embodiment, the beam splitter 4, the polarizing beam splitter 5, and the like. The same applies hereinafter) including at least the beam splitter, and a measurement instrument (in the embodiment, the post-selection 8 or the like. The same applies hereinafter) that detects respective detection timings of photons in the plurality of light receiving elements.

As described above, the measurement device according to the present disclosure detects respective detection timings of photons in the light receiving elements provided corresponding to the paths branched by the plurality of splitters including the beam splitter that causes interference of the quantum entangled light, and thereby can generate the quantum entanglement and perform detection by a simple configuration. Therefore, the measurement device can enable efficient generation of the quantum entanglement.

As described above, the measurement device (in the embodiment, the detection system 1 or the like) according to the present disclosure is a measurement device that receives quantum entangled light from a plurality of paths, and includes a plurality of beam splitters that cause interference of the quantum entangled light, light receiving elements provided corresponding to respective paths branched by the beam splitter, and a measurement instrument that detects respective detection timings of photons in the plurality of light receiving elements.

As described above, the measurement device according to the present disclosure detects respective detection timings of photons in the light receiving elements provided corresponding to the paths branched by the plurality of beam splitters that cause interference of the quantum entangled light, and thereby can generate the quantum entanglement and perform detection by a simple configuration. Therefore, the measurement device can enable efficient generation of the quantum entanglement.

As described above, a measurement device (in the embodiment, the detection system 1A or the like) according to the present disclosure is a measurement device that receives quantum entangled light, and includes a beam splitter that causes interference of the quantum entangled light, a plurality of polarizing beam splitters that branches, in a polarization state, the quantum entangled light after the interference by the beam splitter, light receiving elements provided corresponding to respective paths branched by the polarizing beam splitter, and a measurement instrument that detects respective detection timings of photons in the plurality of light receiving elements.

As described above, the measurement device according to the present disclosure detects respective detection timings of photons in the light receiving elements provided corresponding to the paths branched by the beam splitter that causes interference of the quantum entangled light and the plurality of polarizing beam splitters, and thereby can generate the quantum entanglement and perform detection by a simple configuration. Therefore, the measurement device can enable efficient generation of the quantum entanglement.

As described above, a measurement device (in the embodiment, the detection system 1B or the like) according to the present disclosure is a measurement device that receives quantum entangled light from one or more paths, and includes one or more beam splitters that cause interference of the quantum entangled light, light receiving elements provided corresponding to respective paths branched by a plurality of splitters including at least the beam splitter, a branching unit (in the embodiment, the light branching unit 6 or the like. The same applies hereinafter) that branches light to be introduced into the plurality of light receiving elements, and a measurement instrument that detects respective detection timings of photons in the plurality of light receiving elements.

As described above, the measurement device according to the present disclosure branches light to be introduced into the light receiving elements provided corresponding to the paths branched by the plurality of splitters including the beam splitter that causes interference of the quantum entangled light, and detects respective detection timings of photons in the light receiving elements, and thereby can generate the quantum entanglement and perform detection by a simple configuration. Therefore, the measurement device can enable efficient generation of the quantum entanglement.

Further, the measurement device includes a preprocessing unit (in the embodiment, the first processing unit 2, the second processing unit 3, and the like. The same applies hereinafter) that executes processing on the quantum entangled light before branching by the beam splitter.

As described above, the measurement device according to the present disclosure executes processing on the quantum entangled light before branching by the beam splitter, and thereby can generate the quantum entanglement and perform detection by appropriate processing. Therefore, the measurement device can enable efficient generation of the quantum entanglement.

Further, the preprocessing unit executes at least one processing of wavelength conversion, wavelength selection, or unitary conversion on the quantum entangled light.

As described above, the measurement device according to the present disclosure executes at least one processing of wavelength conversion, wavelength selection, or unitary conversion on the quantum entangled light, and thereby can generate the quantum entanglement and perform detection by appropriate processing. Therefore, the measurement device can enable efficient generation of the quantum entanglement.

Further, the measurement device includes a postprocessing unit (in the embodiment, the first processing unit 2 or the like. The same applies hereinafter) that executes processing on the quantum entangled light after the interference by the beam splitter after the branching by the beam splitter.

As described above, the measurement device according to the present disclosure executes processing on the quantum entangled light after the interference by the beam splitter after the branching by the beam splitter, and thereby can generate the quantum entanglement and perform detection by appropriate processing. Therefore, the measurement device can enable efficient generation of the quantum entanglement.

In addition, the postprocessing unit executes at least one processing of wavelength conversion or wavelength selection on the quantum entangled light after interference by the beam splitter.

As described above, the measurement device according to the present disclosure executes at least one processing of wavelength conversion or wavelength selection on the quantum entangled light after interference by the beam splitter, and thereby can generate the quantum entanglement and perform detection by appropriate processing. Therefore, the measurement device can enable efficient generation of the quantum entanglement.

Further, the light receiving element includes a plurality of detection units (in the embodiment, the detection unit 70, the region AR, and the like. The same applies hereinafter) that detects light branched by the branching unit.

As described above, the measurement device according to the present disclosure detects respective detection timings of photons in the plurality of detection units that detects light branched by the branching unit, and thereby can appropriately perform detection.

Further, the plurality of detection units is a plurality of elements that detects light branched by the branching unit.

As described above, the measurement device according to the present disclosure detects respective detection timings of photons in the plurality of elements that detects light branched by the branching unit, and thereby can appropriately perform detection.

Further, the branching unit is an optical divider that branches and introduces light into each of the plurality of elements.

As described above, the measurement device according to the present disclosure detects respective detection timings of photons in the plurality of detection units that detects light branched by the optical divider that branches and introduces light into each of the plurality of elements, and thereby can appropriately perform detection.

Further, the light receiving element is an array element, and the plurality of detection units is a plurality of regions of a light receiving surface of the array element.

As described above, the measurement device according to the present disclosure detects respective detection timings of photons in the plurality of regions of a light receiving surface of the array element, and thereby can appropriately perform detection.

Further, the branching unit is an optical member that branches and introduces light into each of the plurality of regions of the array element.

As described above, the measurement device according to the present disclosure detects respective detection timings of photons in the plurality of detection units that detects light branched by the optical member that branches and introduces light into each of the plurality of regions of the array element, and thereby can appropriately perform detection.

As described above, the measurement device (in the embodiment, the sensing system 10 or the like) according to the present disclosure includes a quantum entangled light source (in the embodiment, the quantum entangled light source 30 or the like) that outputs at least two photons in a quantum entanglement state, and a quantum entanglement generator (in the embodiment, the quantum entanglement generator 1F or the like. The same applies hereinafter) that detects a detection timing of a photon by a light receiving element provided corresponding to a path branched by at least one beam splitter that causes interference of the quantum entangled light, in which among a first light guide path that applies one of the two photons to an observation target, a second light guide path that guides a photon returning from the observation target to the beam splitter, and a third light guide path that guides the other of the two photons to the beam splitter, the quantum entanglement generator receives light from the second light guide path and the third light guide path.

As described above, the measurement device according to the present disclosure detects respective detection timings of photons in the light receiving elements provided corresponding to the paths branched by at least one beam splitter that causes interference of the quantum entangled light, and thereby can generate the quantum entanglement and perform detection by a simple configuration. Therefore, the measurement device can enable efficient generation of the quantum entanglement.

Further, the measurement device includes a sum frequency generation unit (in the embodiment, the sum frequency generator 40 or the like. The same applies hereinafter) arranged in at least one of the second light guide path or the third light guide path.

As described above, the measurement device according to the present disclosure executes processing related to generation of a sum frequency in at least one path of the second light guide path or the third light guide path, and thereby can appropriately perform detection.

Further, the measurement device includes a phase adjustment unit (in the embodiment, the phase adjuster 25 or the like. The same applies hereinafter) arranged in at least one of the second light guide path or the third light guide path.

As described above, the measurement device according to the present disclosure executes processing related to phase adjustment in at least one path of the second light guide path or the third light guide path, and thereby can appropriately perform detection.

Further, the measurement device includes a band pass filter (in the embodiment, the band pass filter 50 or the like. The same applies hereinafter) arranged in at least one of the second light guide path or the third light guide path.

As described above, the measurement device according to the present disclosure executes processing related to a frequency in at least one path of the second light guide path or the third light guide path, and thereby can appropriately perform detection.

Further, the measurement device includes an excitation light source (in the embodiment, the excitation light source 35 or the like. The same applies hereinafter) that outputs excitation light to the observation target.

As described above, the measurement device according to the present disclosure can perform more sensing related to excitation by outputting the excitation light to the observation target, and can appropriately perform detection.

Further, the quantum entanglement generator includes one or more beam splitters that cause interference of the quantum entangled light, light receiving elements provided corresponding to respective paths branched by a plurality of splitters including at least the beam splitter, and a measurement instrument that detects respective detection timings of photons in the plurality of light receiving elements.

As described above, the measurement device according to the present disclosure detects respective detection timings of photons in the light receiving elements provided corresponding to the paths branched by the plurality of splitters including the beam splitter that causes interference of the quantum entangled light, and thereby can generate the quantum entanglement and perform detection by a simple configuration. Therefore, the measurement device can enable efficient generation of the quantum entanglement.

Further, the quantum entanglement generator includes one or more beam splitters that cause interference of the quantum entangled light, light receiving elements provided corresponding to respective paths branched by a plurality of splitters including at least the beam splitter, a branching unit that branches light to be introduced into the plurality of light receiving elements, and a measurement instrument that detects respective detection timings of photons in the plurality of light receiving elements.

As described above, the measurement device according to the present disclosure branches light to be introduced into the light receiving elements provided corresponding to the paths branched by the plurality of splitters including the beam splitter that causes interference of the quantum entangled light, and detects respective detection timings of photons in the light receiving elements, and thereby can generate the quantum entanglement and perform detection by a simple configuration. Therefore, the measurement device can enable efficient generation of the quantum entanglement.

<5. Hardware Configuration>

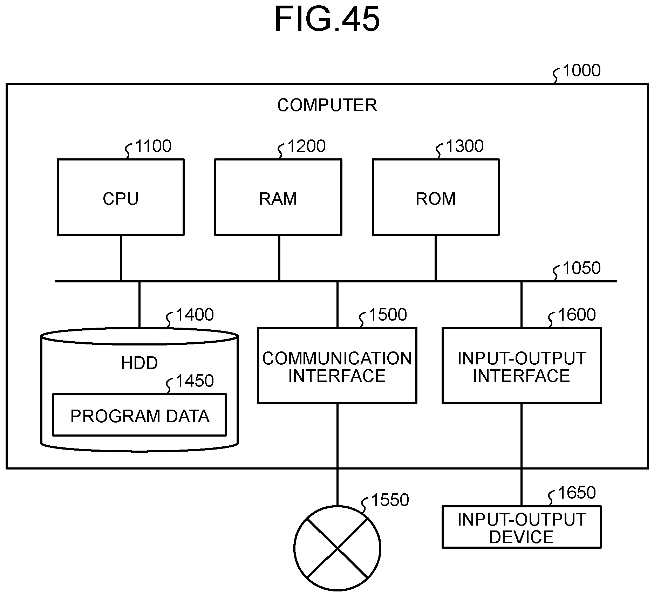

Various information processing devices such as a control device and a signal processing device in the detection system 1, the sensing system 10, and the like according to the above-described embodiments and modification examples are implemented by a computer 1000 having a configuration as illustrated in FIG. 45, for example. FIG. 45 is a hardware configuration diagram illustrating an example of a computer that implements functions of the information processing device. The computer 1000 includes a CPU 1100, a RAM 1200, a read only memory (ROM) 1300, a hard disk drive (HDD) 1400, a communication interface 1500, and an input-output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by such a program, and the like. Specifically, the HDD 1400 is a recording medium that records an information processing program according to the present disclosure as an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input-output interface 1600 is an interface for connecting an input-output device 1650 and the computer 1000. For example, the CPU 1100 receives data from an input device such as a keyboard and a mouse via the input-output interface 1600. Further, the CPU 1100 transmits data to an output device such as a display, a speaker, or a printer via the input-output interface 1600. Furthermore, the input-output interface 1600 may function as a media interface that reads a program or the like recorded in a predetermined recording medium. The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as a control device in the detection system 1, the sensing system 10, or the like, the CPU 1100 of the computer 1000 executes an information processing program loaded on the RAM 1200 to implement a function of a control unit or the like of the control device. Further, the HDD 1400 stores an information processing program according to the present disclosure and data in a storage unit of the control device. Note that the CPU 1100 reads the program data 1450 from the HDD 1400 and executes the program data 1450, but as another example, these programs may be acquired from another device via the external network 1550.

Note that the present technology can also have the following configurations.

(1) A measurement device that receives quantum entangled light from one or more paths, the measurement device comprising:

one or more beam splitters that cause interference of the quantum entangled light;
a plurality of light receiving elements provided corresponding to respective paths branched by a plurality of splitters including at least the beam splitter;
a branching unit that stochastically disperses photons in the plurality of light receiving elements; and
a measurement instrument that detects respective detection timings of photons in the plurality of light receiving elements.

(2) A measurement device that receives quantum entangled light from a plurality of paths, the measurement device comprising:

a plurality of beam splitters that cause interference of the quantum entangled light;
light receiving elements provided corresponding to respective paths branched by the beam splitters; and
a measurement instrument that detects respective detection timings of photons in the plurality of light receiving elements.

(3) A measurement device that receives quantum entangled light, the measurement device comprising:

a beam splitter that causes interference of the quantum entangled light;
a plurality of polarizing beam splitters that branches, in a polarization state, the quantum entangled light after the interference by the beam splitter;
light receiving elements provided corresponding to respective paths branched by the polarizing beam splitter; and
a measurement instrument that detects respective detection timings of photons in the plurality of light receiving elements.

(4) A measurement device that receives quantum entangled light from one or more paths, the measurement device comprising:

one or more beam splitters that cause interference of the quantum entangled light;
light receiving elements provided corresponding to respective paths branched by a plurality of splitters including at least the beam splitter;
a branching unit that branches light to be introduced into the plurality of light receiving elements; and
a measurement instrument that detects respective detection timings of photons in the plurality of light receiving elements.

(5) The measurement device according to any one of (1) to (4), comprising:
a preprocessing unit that executes processing on the quantum entangled light before branching by the beam splitter.

(6) The measurement device according to (5), wherein

the preprocessing unit
executes at least one processing of wavelength conversion, wavelength selection, or unitary conversion on the quantum entangled light.

(7) The measurement device according to (5) or (6), comprising:
a postprocessing unit that executes processing on the quantum entangled light after the interference by the beam splitter after the branching by the beam splitter.

(8) The measurement device according to (7), wherein

the postprocessing unit
executes at least one processing of wavelength conversion or wavelength selection on the quantum entangled light after the interference by the beam splitter.

(9) The measurement device according to (4), wherein

the light receiving element includes
a plurality of detection units that detects light branched by the branching unit.

(10) The measurement device according to (9), wherein

the plurality of detection units
is a plurality of elements that detects light branched by the branching unit.

(11) The measurement device according to (10), wherein

the branching unit
is an optical divider that branches and introduces light into each of the plurality of elements.

(12) The measurement device according to (9), wherein

the light receiving element
is an array element, and
the plurality of detection units
is a plurality of regions of a light receiving surface of the array element.

(13) The measurement device according to (12), wherein

the branching unit
is an optical member that branches and introduces light into each of the plurality of regions of the array element.

(14) A measurement device comprising:

a quantum entangled light source that outputs at least two photons in a quantum entanglement state; and
a quantum entanglement generator that detects a detection timing of a photon by a light receiving element provided corresponding to a path branched by at least one beam splitter that causes interference of the quantum entangled light, wherein
among a first light guide path that applies one of the two photons to an observation target, a second light guide path that guides a photon returning from the observation target to the beam splitter, and a third light guide path that guides the other of the two photons to the beam splitter, the quantum entanglement generator receives light from the second light guide path and the third light guide path.

(15) The measurement device according to (14), comprising:
a sum frequency generation unit arranged in at least one of the second light guide path or the third light guide path.
(16) The measurement device according to (14) or (15), comprising:
a phase adjustment unit arranged in at least one of the second light guide path or the third light guide path.
(17) The measurement device according to any one of (14) to (16), comprising:
a band pass filter arranged in at least one of the second light guide path or the third light guide path.
(18) The measurement device according to any one of (14) to (17), comprising:
an excitation light source that outputs excitation light to the observation target.
(19) The measurement device according to any one of (14) to (18), wherein
the quantum entanglement generator includes:

one or more beam splitters that cause interference of the quantum entangled light;
light receiving elements provided corresponding to respective paths branched by a plurality of splitters including at least the beam splitter; and
a measurement instrument that detects respective detection timings of photons in the plurality of light receiving elements.

(20) The measurement device according to any one of (14) to (18), wherein
the quantum entanglement generator includes:

one or more beam splitters that cause interference of the quantum entangled light;
light receiving elements provided corresponding to respective paths branched by a plurality of splitters including at least the beam splitter;
a branching unit that branches light to be introduced into the plurality of light receiving elements; and
a measurement instrument that detects respective detection timings of photons in the plurality of light receiving elements.

Reference Signs List

| | |
|---|---|
| 1 | DETECTION SYSTEM (MEASUREMENT DEVICE AND QUANTUM ENTANGLEMENT GENERATOR) |
| 2 | FIRST PROCESSING UNIT |
| 3 | SECOND PROCESSING UNIT |
| 4 | BEAM SPLITTER (BS) |
| 5 | POLARIZING BEAM SPLITTER (PBS) |
| 6 | LIGHT BRANCHING UNIT |
| 7 | PHOTODETECTOR |
| 8 | POST-SELECTION |
| 9 | MIRROR |
| 10 | SENSING SYSTEM (MEASUREMENT DEVICE) |
| 20 | PHASE MODULATOR |
| 25 | PHASE ADJUSTER |
| 30 | QUANTUM ENTANGLED LIGHT SOURCE |
| 35 | EXCITATION LIGHT SOURCE |
| 40 | SUM FREQUENCY GENERATOR |
| 50 | BAND PASS FILTER (BPF) |

**Claims**

1.  A measurement device that receives quantum entangled light from one or more paths, the measurement device comprising:

    one or more beam splitters that cause interference of the quantum entangled light;

a plurality of light receiving elements provided corresponding to respective paths branched by a plurality of splitters including at least the beam splitter;

a branching unit that stochastically disperses photons in the plurality of light receiving elements; and

a measurement instrument that detects respective detection timings of photons in the plurality of light receiving elements.

2. A measurement device that receives quantum entangled light from a plurality of paths, the measurement device comprising:

a plurality of beam splitters that cause interference of the quantum entangled light;

light receiving elements provided corresponding to respective paths branched by the beam splitters; and

a measurement instrument that detects respective detection timings of photons in the plurality of light receiving elements.

3. A measurement device that receives quantum entangled light, the measurement device comprising:

a beam splitter that causes interference of the quantum entangled light;

a plurality of polarizing beam splitters that branches, in a polarization state, the quantum entangled light after the interference by the beam splitter;

light receiving elements provided corresponding to respective paths branched by the polarizing beam splitter; and

a measurement instrument that detects respective detection timings of photons in the plurality of light receiving elements.

4. A measurement device that receives quantum entangled light from one or more paths, the measurement device comprising:

one or more beam splitters that cause interference of the quantum entangled light;

light receiving elements provided corresponding to respective paths branched by a plurality of splitters including at least the beam splitter;

a branching unit that branches light to be introduced into the plurality of light receiving elements; and

a measurement instrument that detects respective detection timings of photons in the plurality of light receiving elements.

5. The measurement device according to claim 1, comprising:
a preprocessing unit that executes processing on the quantum entangled light before branching by the beam splitter.

6. The measurement device according to claim 5, wherein

the preprocessing unit

executes at least one processing of wavelength conversion, wavelength selection, or unitary conversion on the quantum entangled light.

7. The measurement device according to claim 5, comprising:
a postprocessing unit that executes processing on the quantum entangled light after the interference by the beam splitter after the branching by the beam splitter.

8. The measurement device according to claim 7, wherein

the postprocessing unit

executes at least one processing of wavelength conversion or wavelength selection on the quantum entangled light after the interference by the beam splitter.

9. The measurement device according to claim 4, wherein

the light receiving element includes

a plurality of detection units that detects light branched by the branching unit.

10. The measurement device according to claim 9, wherein

the plurality of detection units
is a plurality of elements that detects light branched by the branching unit.

11. The measurement device according to claim 10, wherein

the branching unit
is an optical divider that branches and introduces light into each of the plurality of elements.

12. The measurement device according to claim 9, wherein

the light receiving element
is an array element, and
the plurality of detection units
is a plurality of regions of a light receiving surface of the array element.

13. The measurement device according to claim 12, wherein

the branching unit
is an optical member that branches and introduces light into each of the plurality of regions of the array element.

14. A measurement device comprising:

a quantum entangled light source that outputs at least two photons in a quantum entanglement state; and
a quantum entanglement generator that detects a detection timing of a photon by a light receiving element
provided corresponding to a path branched by at least one beam splitter that causes interference of the quantum
entangled light, wherein
among a first light guide path that applies one of the two photons to an observation target, a second light guide
path that guides a photon returning from the observation target to the beam splitter, and a third light guide path that
guides the other of the two photons to the beam splitter, the quantum entanglement generator receives light from
the second light guide path and the third light guide path.

15. The measurement device according to claim 14, comprising:
a sum frequency generation unit arranged in at least one of the second light guide path or the third light guide path.

16. The measurement device according to claim 14, comprising:
a phase adjustment unit arranged in at least one of the second light guide path or the third light guide path.

17. The measurement device according to claim 14, comprising:
a band pass filter arranged in at least one of the second light guide path or the third light guide path.

18. The measurement device according to claim 14, comprising:
an excitation light source that outputs excitation light to the observation target.

19. The measurement device according to claim 14, wherein
the quantum entanglement generator includes:

one or more beam splitters that cause interference of the quantum entangled light;
light receiving elements provided corresponding to respective paths branched by a plurality of splitters including
at least the beam splitter; and
a measurement instrument that detects respective detection timings of photons in the plurality of light receiving
elements.

20. The measurement device according to claim 14, wherein
the quantum entanglement generator includes:

one or more beam splitters that cause interference of the quantum entangled light;
light receiving elements provided corresponding to respective paths branched by a plurality of splitters including
at least the beam splitter;

a branching unit that branches light to be introduced into the plurality of light receiving elements; and
a measurement instrument that detects respective detection timings of photons in the plurality of light receiving elements.

FIG.1

# FIG.2

START

↓ S1

QUANTUM
BIT ENCODING
METHOD

POLARIZATION ← → PATH

S2

PHOTON
INTRODUCTION
IN
POLARIZATION
ENCODING

S3

PHOTON
INTRODUCTION
IN PATH
ENCODING

PHOTON
DETECTION ~ S4

POST-
SELECTION ~ S5

END

# FIG.3

Node a

QUANTUM MEMORY ← QUANTUM ENTANGLED LIGHT SOURCE

QUANTUM ENTANGLEMENT FORMATION

QUANTUM MEMORY ← QUANTUM ENTANGLED LIGHT SOURCE

Node b

**PRESENT EMBODIMENT**

PROVIDE METHOD FOR BELL MEASUREMENT

# FIG.4

SENSING TARGET

QUANTUM ENTANGLED LIGHT SOURCE

**PRESENT EMBODIMENT**

PROVIDE METHOD FOR TWO-PHOTON INTERFERENCE

FIG.5

EP 4 535 689 A1

# FIG.6

EP 4 535 689 A1

# FIG.7

```
┌─────────────────────────────┐
│ PHOTON INTRODUCTION IN      │
│ POLARIZATION ENCODING       │
└─────────────────────────────┘
              │
              ▼
┌─────────────────────────────┐
│ (WAVELENGTH CONVERSION AND  │  ～S11
│ WAVELENGTH SELECTION)       │
└─────────────────────────────┘
              │
              ▼
┌─────────────────────────────┐
│ UNITARY CONVERSION OF INPUT │  ～S12
│ LIGHT                       │
└─────────────────────────────┘
              │
              ▼
┌─────────────────────────────┐
│ UNITARY CONVERSION OF INPUT │  ～S13
│ LIGHT                       │
└─────────────────────────────┘
              │
              ▼
┌─────────────────────────────┐
│ BRANCHING BY POLARIZATION   │  ～S14
└─────────────────────────────┘
              │
              ▼
┌─────────────────────────────┐
│ BRANCHING OF INPUT PHOTONS  │  ～S15
└─────────────────────────────┘
              │
              ▼
┌─────────────────────────────┐
│            END              │
└─────────────────────────────┘
```

# FIG.8

```
┌─────────────────────────────┐
│ PHOTON                      │
│ INTRODUCTION IN             │
│ PATH ENCODING               │
└─────────────────────────────┘
              │
              ▼
┌─────────────────────────────┐
│ (WAVELENGTH                 │
│ CONVERSION AND              │  ～S21
│ WAVELENGTH                  │
│ SELECTION)                  │
└─────────────────────────────┘
              │
              ▼
┌─────────────────────────────┐
│ UNITARY CONVERSION          │  ～S22
│ OF INPUT LIGHT              │
└─────────────────────────────┘
              │
              ▼
┌─────────────────────────────┐
│ INTERFERENCE OF             │  ～S23
│ INPUT PHOTONS               │
└─────────────────────────────┘
              │
              ▼
┌─────────────────────────────┐
│            END              │
└─────────────────────────────┘
```

# FIG.9

```
        ┌─────────────────────────┐
        │    PHOTON DETECTION     │
        └─────────────────────────┘
                    │
        ┌─────────────────────────┐
        │      (WAVELENGTH        │
        │   CONVERSION AND        │──~S31
        │      WAVELENGTH         │
        │      SELECTION)         │
        └─────────────────────────┘
                    │
        ┌─────────────────────────┐
        │    LIGHT SPLITTING      │──~S32
        └─────────────────────────┘
                    │
        ┌─────────────────────────┐
        │   (CONDENSING LIGHT)    │──~S33
        └─────────────────────────┘
                    │
        ┌─────────────────────────┐
        │      (ISOLATION)        │──~S34
        └─────────────────────────┘
                    │
        ┌─────────────────────────┐
        │     LIGHT DETECTION     │──~S35
        └─────────────────────────┘
                    │
              ⌐S36        ANALOG
           ╱         ╲    SIGNAL
          ╱  METHOD   ╲
         ╱ FOR OUTPUTTING╲
         ╲ LIGHT DETECTION╱────┐
          ╲ INFORMATION ╱      │
           ╲         ╱         │
     DIGITAL SIGNAL             │
        ┌─────────────────────────┐
        │   DETECT TIMING OF      │──⌐S37
        │   LIGHT DETECTION       │
        └─────────────────────────┘
                    │            │
        ┌─────────────────────────┐
        │  OUTPUT INFORMATION     │──~S38
        │  ON LIGHT DETECTION     │
        └─────────────────────────┘
                    │
        ┌─────────────────────────┐
        │          END            │
        └─────────────────────────┘
```

# FIG.10

# FIG.11

DETECTOR SYSTEM INCLUDING
PLURALITY OF DETECTORS

PHO-
TON

TIMING
CLOCK

ANOTHER
DETECTOR
SYSTEM

# FIG.12

DETECTOR INCLUDING
PLURALITY OF ELEMENTS

TIMING
CLOCK

ANOTHER
DETECTOR

Detector pixel array

# FIG.13

```
        ┌─────────────────────────┐
        │      POST-SELECTION      │
        └─────────────────────────┘
                     │
        ┌─────────────────────────┐
        │      RECEIVE LIGHT       │~ S41
        │  DETECTION INFORMATION   │
        └─────────────────────────┘
                     │
                    ╱╲  S42
                   ╱    ╲         NOT DETECTED
                  ╱DETERMI-╲      SIMULTANEOUSLY
                 ╱ NATION   ╲
                ╱OF SIMULTANE-╲
                ╲OUS DETECTION╱
                 ╲OF PHOTONS ╱
                  ╲         ╱
      DETECTED     ╲      ╱
    SIMULTANEOUSLY  ╲   ╱
                    ╱╲  S43
                   ╱    ╲
    UNNECESSARY   ╱QUANTUM╲
       ┌─────────╱ENTANGLE-╲
       │        ╲ MENT     ╱
       │        ╲FORMATION╱
       │         ╲ IS    ╱
       │         ╲NECESSARY?╱
       │          ╲      ╱
       │           NECESSARY
       │              │
┌──────────────┐  ┌──────────────┐
│  NOTIFY OF   │  │ CONFIRM BELL │~ S44
│ SIMULTANEOUS │  │    STATE     │
│  DETECTION   │  └──────────────┘
│      S46     │         │
└──────────────┘  ┌──────────────┐
       │          │NOTIFY OF BELL│~ S45
       │          │    STATE     │
       │          └──────────────┘
       │                 │
       └─────────────────┤
                     │
        ┌─────────────────────────┐
        │           END            │
        └─────────────────────────┘
```

# FIG.14

```
┌─────────────────┐                    ┌─────────────────┐
│                 │                    │     POST-       │
│     PHOTO-      │ ◄────────────────► │   SELECTION     │
│    DETECTOR     │                    │  FUNCTIONAL     │
│    (GROUP)      │                    │     UNIT        │
│                 │                    │                 │
└─────────────────┘                    └─────────────────┘
```

# FIG.15

```
┌─────────────────┐                    ┌─────────────────┐
│                 │                    │     POST-       │
│     PHOTO-      │ ◄────────────────► │   SELECTION     │
│    DETECTOR     │                    │  FUNCTIONAL     │
│    (GROUP)      │                    │     UNIT        │
│                 │                    │                 │
└────────┬────────┘                    └─────────────────┘
         │
         ▲
         ▼
┌─────────────────┐                    ┌─────────────────┐
│                 │                    │     POST-       │
│     PHOTO-      │ ◄────────────────► │   SELECTION     │
│    DETECTOR     │                    │  FUNCTIONAL     │
│    (GROUP)      │                    │     UNIT        │
│                 │                    │                 │
└─────────────────┘                    └─────────────────┘
```

FIG.16

→ (IN CASE OF QUANTUM COMMUNICATION): OPTICAL FIBER
  (IN CASE OF QUANTUM SENSING):
  EITHER OPTICAL FIBER OR FREE SPACE

⋯→ ANY OF OPTICAL FIBER, WAVEGUIDE IN OPTICAL CIRCUIT,
  AND FREE SPACE

–·–→ ANY SIGNAL TRANSMISSION PATH DEPENDING ON
  METHOD FOR IMPLEMENTING POST-SELECTION

1B

QUANTUM ENTANGLED LIGHT SOURCE a
$\frac{1}{\sqrt{2}}\left(|H\rangle_a + e^{i\theta}|V\rangle_a\right)$

2a WAVELENGTH CONVERSION + WAVELENGTH SELECTION

3a $U_a$

QUANTUM ENTANGLED LIGHT SOURCE b
$\frac{1}{\sqrt{2}}\left(|H\rangle_b + e^{i\theta}|V\rangle_b\right)$

2b WAVELENGTH CONVERSION + WAVELENGTH SELECTION

3b $U_b$

5a PBS

5b PBS

4 BS

6a LIGHT BRANCHING UNIT — 7a PHOTO-DETECTOR

6b LIGHT BRANCHING UNIT — 7b PHOTO-DETECTOR

6c LIGHT BRANCHING UNIT — 7c PHOTO-DETECTOR

6d LIGHT BRANCHING UNIT — 7d PHOTO-DETECTOR

8 POST-SELECTION

PT1

# FIG.17

```
      ┌──────────────────────┐
      │       PHOTON         │
      │  INTRODUCTION IN     │
      │   POLARIZATION       │
      │     ENCODING         │
      └──────────────────────┘
                 │
                 ▼
┌────────────────────────────────┐
│   WAVELENGTH CONVERSION AND     │ ── S51
│     WAVELENGTH SELECTION        │
└────────────────────────────────┘
                 │
                 ▼
┌────────────────────────────────┐
│  UNITARY CONVERSION OF INPUT LIGHT │ ── S52
└────────────────────────────────┘
                 │
                 ▼
┌────────────────────────────────┐
│   INTERFERENCE OF INPUT PHOTONS  │ ── S53
└────────────────────────────────┘
                 │
                 ▼
┌────────────────────────────────┐
│    BRANCHING BY POLARIZATION     │ ── S54
└────────────────────────────────┘
                 │
                 ▼
┌────────────────────────────────┐
│   BRANCHING OF INPUT PHOTONS     │ ── S55
└────────────────────────────────┘
                 │
                 ▼
          ┌──────────────┐
          │     END      │
          └──────────────┘
```

FIG.18

# FIG.19

PHOTON INTRODUCTION IN PATH ENCODING

WAVELENGTH CONVERSION AND WAVELENGTH SELECTION — S61

UNITARY CONVERSION OF INPUT LIGHT — S62

BEAM SPLITTER — S63

BRANCHING OF INPUT PHOTONS — S64

END

# FIG.20

```
            ( POST-SELECTION )
                   │
                   ▼
  ┌─────────────────────────────────┐
  │   RECEIVE LIGHT DETECTION        │ ～S71
  │        INFORMATION               │
  └─────────────────────────────────┘
                   │
                   ▼
                  ╱ ╲
NOT DETECTED    ╱     ╲        ～S72
SIMULTANEOUSLY ╱  DETERMINATION OF ╲
  ◄───────────  SIMULTANEOUS DETECTION
  │            ╲   OF PHOTONS   ╱
  │             ╲             ╱
  │              ╲  ╱
  │          DETECTED SIMULTANEOUSLY
  │                   │
  │                   ▼
  │   ┌─────────────────────────────┐
  │   │   CONFIRM BELL STATE        │ ～S73
  │   └─────────────────────────────┘
  │                   │
  │                   ▼
  │   ┌─────────────────────────────┐
  │   │   NOTIFY OF BELL STATE      │ ～S74
  │   └─────────────────────────────┘
  │                   │
  └──────────────────►│
                      ▼
               ( END )
```

# FIG.21

1D

QUANTUM ENTANGLED LIGHT SOURCE a
$$\frac{1}{\sqrt{2}}(|0\rangle_a + e^{i\theta}|1\rangle_a)$$

QUANTUM ENTANGLED LIGHT SOURCE b
$$\frac{1}{\sqrt{2}}(|0\rangle_b + e^{i\theta}|1\rangle_b)$$

2a WAVELENGTH CONVERSION + WAVELENGTH SELECTION

2b WAVELENGTH CONVERSION + WAVELENGTH SELECTION

3a $U_a$

3b $U_b$

4 BS

6b LIGHT BRANCH-ING UNIT

6d LIGHT BRANCH-ING UNIT

7b PHOTO-DETEC-TOR

7d PHOTO-DETEC-TOR

8 POST-SELECTION

# FIG.22

```
┌─────────────────────────┐
│        PHOTON           │
│    INTRODUCTION IN       │
│  PHOTON PRESENCE/        │
│  ABSENCE ENCODING        │
└─────────────────────────┘
             │
             ▼
┌─────────────────────────────────┐
│  WAVELENGTH CONVERSION AND       │  S81
│  WAVELENGTH SELECTION            │
└─────────────────────────────────┘
             │
             ▼
┌─────────────────────────────────┐
│  UNITARY CONVERSION OF INPUT LIGHT │  S82
└─────────────────────────────────┘
             │
             ▼
┌─────────────────────────────────┐
│  INTERFERENCE OF INPUT PHOTONS   │  S83
└─────────────────────────────────┘
             │
             ▼
┌─────────────────────────────────┐
│  BRANCHING BY POLARIZATION       │  S84
└─────────────────────────────────┘
             │
             ▼
┌─────────────────────────────────┐
│  BRANCHING OF INPUT PHOTONS      │  S85
└─────────────────────────────────┘
             │
             ▼
┌─────────────────────────┐
│          END            │
└─────────────────────────┘
```

# FIG.23

EP 4 535 689 A1

# FIG.24

```
        ┌─────────────────────────┐
        │        PHOTON           │
        │   INTRODUCTION IN       │
        │    TIME ENCODING        │
        └─────────────────────────┘
                    │
                    ▼
   ┌──────────────────────────────────┐
   │  WAVELENGTH CONVERSION AND       │ ～S91
   │    WAVELENGTH SELECTION          │
   └──────────────────────────────────┘
                    │
                    ▼
   ┌──────────────────────────────────┐
   │ UNITARY CONVERSION OF INPUT LIGHT│ ～S92
   └──────────────────────────────────┘
                    │
                    ▼
   ┌──────────────────────────────────┐
   │        BEAM SPLITTER #1          │ ～S93
   └──────────────────────────────────┘
                    │
                    ▼
   ┌──────────────────────────────────┐
   │        PHASE MODULATION          │ ～S94
   └──────────────────────────────────┘
                    │
                    ▼
   ┌──────────────────────────────────┐
   │        BEAM SPLITTER #2          │ ～S95
   └──────────────────────────────────┘
                    │
                    ▼
   ┌──────────────────────────────────┐
   │    BRANCHING OF INPUT PHOTONS    │ ～S96
   └──────────────────────────────────┘
                    │
                    ▼
        ┌─────────────────────────┐
        │          END            │
        └─────────────────────────┘
```

# FIG.25

EP 4 535 689 A1

# FIG.26

POST-SELECTION

RECEIVE LIGHT DETECTION INFORMATION — S101

DETERMINATION OF SIMULTANEOUS DETECTION OF PHOTONS — S102

NOT DETECTED SIMULTANEOUSLY

DETECTED SIMULTANEOUSLY

NOTIFY OF SIMULTANEOUS DETECTION — S103

END

FIG.27

# FIG.28

## FIG.29

SIGNAL EXCITATION LIGHT

# FIG.30

EP 4 535 689 A1

# FIG.31

# FIG.32

# FIG.33

# FIG.34

| LIGHT DETECTION EFFICIENCY $\eta_{PDE}$ | DARK COUNT RATE $R_{DCR}$ [1/s] | Deadtime $T_{DT}$ | LIGHT DETECTION TIME WIDTH $T_{window}$ |
|---|---|---|---|
| 65% | 100 | 10 ns | 250 ps |

FIG.35

STATE OF
DETECTOR

dead

alive

TIME t

$T_{DT}$

EVENT WHERE DETECTOR REACTS
BUT CANNOT BE DETECTED

EXTENDED deadtime

REACTION OF
LIGHT IN DETECTOR

STATE OF
DETECTOR

dead

alive

TIME t

$T_{DT}$

64

# FIG.36

dead

$T_{DT}$

alive

ELAPSED TIME FROM
PREVIOUS LIGHT DETECTION

TIME t

# FIG.37

dead

$T_{DT}$

alive

ELAPSED TIME FROM
PREVIOUS LIGHT DETECTION

TIME t

# FIG.38

PHOTODETECTOR

DETECTION EFFICIENCY
$\eta_{PDE}$

dead

alive

T

TIME t

IT CAN BE CONSIDERED THAT
LIGHT IS UNIFORMLY DIFFUSED IN
TIME WIDTH $T_{window}$ OF DETECTOR

# FIG.39

INPUT LIGHT RATE : $R_{pulse}$  PHOTO-DETECTOR

dead

alive

$T_{DT}$

$t_0$

TIME t

PERIOD IN WHICH DETECTOR
SHOULD NOT REACT TO
DETECT LIGHT AT $t_0$

dead

alive

$T_{window}$

TIME t

IT CAN BE CONSIDERED THAT
LIGHT IS UNIFORMLY DIFFUSED IN
TIME WIDTH $T_{window}$ OF DETECTOR

EP 4 535 689 A1

# FIG.40

INPUT LIGHT
RATE: $R_{pulse}$

DARK COUNT
RATE: $R_{DCR}$

NUMBER OF SPADS
CONSTITUTING
PHOTODETECTOR: $N_{SPAD}$

# FIG.41

DARK COUNT
RATE: $R_{DCR}$

INSTANTANEOUS INPUT
LIGHT RATE: $R_{impulse}$

# FIG.42

# FIG.43

| $N_{SPAD}$ | $R_{max}$ |
|---|---|
| 1 | 1.32E+06 |
| 4 | 2.09E+07 |
| 9 | 1.04E+08 |
| 16 | 3.24E+08 |
| 25 | 7.72E+08 |
| 36 | 1.55E+09 |
| 49 | 2.76E+09 |
| 64 | 4.56E+09 |
| 81 | 7.00E+09 |
| 100 | 1.02E+10 |
| 121 | 1.42E+10 |
| 144 | 1.91E+10 |
| 169 | 2.49E+10 |
| 196 | 3.18E+10 |
| 225 | 3.96E+10 |
| 256 | 4.84E+10 |
| 289 | 5.83E+10 |
| 324 | 6.93E+10 |
| 361 | 8.14E+10 |
| 400 | 9.46E+10 |

# FIG.44

# FIG.45

## INTERNATIONAL SEARCH REPORT

| International application No. |
| --- |
| **PCT/JP2023/013509** |

### A. CLASSIFICATION OF SUBJECT MATTER

*H04B 10/70*(2013.01)i; *H04L 9/12*(2006.01)i
FI:   H04B10/70; H04L9/12

According to International Patent Classification (IPC) or to both national classification and IPC

### B. FIELDS SEARCHED

Minimum documentation searched (classification system followed by classification symbols)

H04B10/70; H04L9/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2013-254201 A (TOSHIBA CORP.) 19 December 2013 (2013-12-19) paragraphs [0038]-[0047], fig. 2 | 3 |
| A | | 1-2, 4-20 |
| A | US 2016/0315715 A1 (THE BOEING COMPANY) 27 October 2016 (2016-10-27) | 1-20 |
| A | US 2022/0004075 A1 (PSIQUANTUM, CORP.) 06 January 2022 (2022-01-06) | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| **31 May 2023** | **13 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<table>
<tr><td colspan="2" align="center">**INTERNATIONAL SEARCH REPORT**<br>Information on patent family members</td><td colspan="2">International application No.<br><br>**PCT/JP2023/013509**</td></tr>
</table>

| Patent document<br>cited in search report | Publication date<br>(day/month/year) | Patent family member(s) | Publication date<br>(day/month/year) |
|---|---|---|---|
| JP 2013-254201 A | 19 December 2013 | US 2013/0322873 A1<br>paragraphs [0057]-[0067], fig. 2<br>GB 2502264 A | |
| US 2016/0315715 A1 | 27 October 2016 | US 2017/0134100 A1<br>US 9413470 B1 | |
| US 2022/0004075 A1 | 06 January 2022 | WO 2022/006166 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012004956 A